(19) **Europäisches Patentamt**
**European Patent Office**
**Office européen des brevets**

(11) **EP 3 002 812 B1**

(12) **EUROPEAN PATENT SPECIFICATION**

(45) Date of publication and mention
of the grant of the patent:
**14.06.2017 Bulletin 2017/24**

(51) Int Cl.:
***H01M 8/1246*** (2016.01)    ***H01M 8/2425*** (2016.01)
***H01M 8/0217*** (2016.01)    ***H01M 8/0228*** (2016.01)
***H01M 8/124*** (2016.01)

(21) Application number: **15187523.4**

(22) Date of filing: **30.09.2015**

(54) **SOLID OXIDE FUEL CELL STACK**

**FESTOXIDBRENNSTOFFZELLENSTAPEL**

**PILE A COMBUSTIBLE D'OXYDE SOLIDE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2014 JP 2014202406
31.03.2015 JP 2015074370**

(43) Date of publication of application:
**06.04.2016 Bulletin 2016/14**

(73) Proprietor: **Toto Ltd.**
**Kitakyushu-shi, Fukuoka 802-8601 (JP)**

(72) Inventors:
• **KAKINUMA, Yasuo**
**Kokurakita-ku, Kitakyushi-shi, Fukuoka
802-8601 (JP)**
• **OKAMOTO, Osamu**
**Kokurakita-ku, Kitakyushi-shi, Fukuoka
802-8601 (JP)**
• **ANDO, Shigeru**
**Kokurakita-ku, Kitakyushi-shi, Fukuoka
802-8601 (JP)**
• **MURAKAMI, Hironobu**
**Kokurakita-ku, Kitakyushi-shi, Fukuoka
802-8601 (JP)**
• **FURUYA, Seiki**
**Kokurakita-ku, Kitakyushi-shi, Fukuoka
802-8601 (JP)**

• **MOMIYAMA, Yutaka**
**Kokurakita-ku, Kitakyushi-shi, Fukuoka
802-8601 (JP)**
• **HAYAMA, Kiyoshi**
**Kokurakita-ku, Kitakyushi-shi, Fukuoka
802-8601 (JP)**
• **WATANABE, Naoki**
**Kokurakita-ku, Kitakyushi-shi, Fukuoka
802-8601 (JP)**
• **TANAKA, Shuhei**
**Kokurakita-ku, Kitakyushi-shi, Fukuoka
802-8601 (JP)**
• **ISAKA, Nobuo**
**Kokurakita-ku, Kitakyushi-shi, Fukuoka
802-8601 (JP)**
• **HOSHIKO, Takuya**
**Kokurakita-ku, Kitakyushi-shi, Fukuoka
802-8601 (JP)**
• **SATO, Masaki**
**Kokurakita-ku, Kitakyushi-shi, Fukuoka
802-8601 (JP)**

(74) Representative: **ABG Patentes, S.L.**
**Avenida de Burgos, 16D
Edificio Euromor
28036 Madrid (ES)**

(56) References cited:
**EP-A1- 1 788 653    US-A1- 2014 017 596
US-B1- 6 228 522**

**Description**

FIELD OF INVENTION

The present invention relates to a solid oxide fuel cell stack. More specifically, the present invention relates to a solid oxide fuel cell stack that includes an interconnector that has an excellent electrical conductivity and a gas sealing property.

BACKGROUND ART

Fuel cells are energy converters that, unlike heat engines which go through heat energy and kinetic energy processes, include reacting fuels such as natural gas and hydrogen with oxygen in the air through a solid electrolyte and continuously and directly obtaining electric energy from chemical energy possessed by fuels. Among them, solid oxide fuel cells are fuel cells that operate as cells including a solid oxide (ceramic) as a solid electrolyte, a fuel electrode as a negative electrode, and an air electrode as a positive electrode. Further, solid oxide fuel cells are known as having an advantage that a high energy conversion efficiency can be obtained.

In solid oxide fuel cells, the output per unit cell is so low that power generation is carried out by enhancing output through connection of a plurality of unit cells in series. Members through which adjacent unit cells are electrically connected are called "interconnectors." Interconnectors using ceramics as materials, hereinafter referred to also as "ceramic interconnectors", are known. Gas sealing properties high enough to prevent gas permeation, electrical conductivity, oxide ion insulating properties, and adhesion to solid electrolyte are required as properties of ceramic interconnectors.

In general, a ceramic interconnector cannot provide satisfactory electrical conductivity unless the thickness is small, for example, approximately not more than 100 $\mu$m. When an attempt is made to form a ceramic interconnector having a reduced small thickness so as to obtain satisfactory electrical conductivity on a surface of porous electrodes, such as fuel electrodes and air electrodes, there is a possibility that the ceramic interconnector is disadvantageously incorporated into the porous electrode. This leads to a disadvantage of a possibility that the ceramic interconnector cannot be formed or a possibility that, even when the ceramic interconnector can be formed, the thickness is so small that satisfactory gas sealing properties cannot be obtained.

When the gas sealing property of a ceramic interconnector is low, the fuel gas is disadvantageously leaked from the fuel electrode side of the ceramic interconnector to the air electrode side, resulting in mixing with air. In order to enhance the gas sealing property of the ceramic interconnector, the denseness of the ceramic interconnector should be increased. To this end, the ceramic interconnector should be densely sintered. When the electrical conductivity of the ceramic interconnector is low, the resistance of the ceramic interconnector is so high that the output of the fuel cell is disadvantageously lowered. Further, when the oxide ion insulating property of the ceramic interconnector is low, the oxide ions are disadvantageously leaked from the air electrode side to the fuel electrode side of the interconnector, leading to a lowered efficiency of the fuel cell. In addition, when the adhesion between the solid electrolyte and the ceramic interconnector is low, disadvantageously, gaps such as cracking occur between the solid electrolyte and the ceramic interconnector, resulting in leakage of the fuel gas through the gaps.

Lanthanum chromite($LaCrO_3$)-based interconnectors have widely been used as materials for ceramic interconnector. It is known that the $LaCrO_3$-based interconnectors have a high electrical conductivity but cannot be sintered without difficulties. Further, since chromium (Cr) is contained, there is a possibility that the so-called Cr poisoning occurs.

Further, SLT-based interconnectors represented by $SrLaTiO_{3-\delta}$ have widely been used as materials for ceramic interconnectors. It is known that the SLT-based interconnectors have lower electrical conductivity but have better sinterability as compared with the $LaCrO_3$-based interconnectors. In the SLT-based interconnectors, for example, the electrical conductivity is developed by replacing Sr site in the crystal lattice of $SrTiO_3$, that is an insulator, with lanthanum (La) to give $SrLaTiO_3$-$\delta$ (SLT), thereby converting a part of $Ti^{4+}$ in Ti site in the crystal lattice of $SrLaTiO_3$-$\delta$ (SLT) to $Ti^{3+}$. $\delta$ is a value that is required to meet a neutral condition of the electric charge.

JP 2008-270203A (PTL 1) aims to provide an SLT-based ceramic interconnector that can simultaneously realize an improvement in electrical conductivity and an improvement in adhesion to a solid electrolyte while maintaining good airtightness. In order to realize this object, this patent literature describes that the ceramic interconnector has a two-layer structure of an airtightness-oriented portion formed on the fuel electrode side and an electrical conductivity-oriented portion that is formed on the air electrode side and has a higher electrical conductivity than the airtightness-oriented portion. According to this literature, the airtightness-oriented portion is formed of $Sr_{1-3x/2}La_xTi_{1+}yO_{3-\delta}$ as a material, and the electrical conductivity-oriented portion is formed of $Sr_{1-3z/2}La_zTiO_3$ as a material. In the airtightness-oriented portion, excessive Sr is unfavorable because it disadvantageously inhibits sintering. The electrical conductivity of the ceramic interconnector is disadvantageously lowered when the content of La is excessively large or excessively small. For this reason, x is $0.15 \leq x \leq 0.4$. The content of Ti is $0.2 \leq y \leq 0.4$ from the viewpoint of an improvement of the adhesion and the electrical conductivity of the ceramic interconnector. In the electrical conductivity-oriented portion, the replacement ratio of Sr with La is important for the improvement of the electrical conductivity and z is $0.2 \leq z \leq 0.4$.

JP 2013-030270A (PTL 2) discloses a ceramic interconnector that contains $Sr_xLn_yTiO_{3-\delta}$ and at least one transition metal selected from Ni, Fe, Co, and Cu and that has a structure of at least two layers. According to this literature, the advantage of the ceramic interconnector is that, since the two-layer structure includes a porous layer (first layer) provided on the fuel electrode side and having a relative density of less than 95% and a dense layer (second layer) provided on the air electrode side and having a relative density of not less than 95%, the porous layer provides high electrical conductivity while the dense layer provides good gas sealing property.

The interconnector described in PTL 1 however has a two-layer structure composed of an airtightness-oriented portion and an electrical conductivity-oriented portion for the separation of functions of the individual layers, and difficulties are encountered in simultaneously realizing excellent airtightness and electrical conductivity through the airtightness-oriented portion provided on the fuel electrode side. For PTL 2, electrical conductivity is obtained by the adoption of a porous structure in the first layer provided on the fuel electrode side in the interconnectors rather than by the adoption of dense structure.

Citation List

Patent Literature

  [PTL 1] JP 2008-270203A
  [PTL 2] JP 2013-030270A

US 6,228,522 B1 discloses the use of a perowskite for the coating of interconnectors which are used in high temperature fuel cells.

EP1788653 A1 refers to a film formed article suitable for protecting an interconnector on the fuel electrode of a solid oxide fuel cell from steam.

SUMMARY OF THE INVENTION

The present inventors have now found that the provision of a dense and electrically conductive intermediate layer between a fuel electrode and an interconnector separately from the interconnector is advantageous in that the incorporation of the interconnector into the fuel electrode in the formation of the interconnector can be prevented and the interconnector can be formed as a thin layer. It was also found that, since the inermediate layer is electrically conductive, good electrical conductivities can be obtained without sacrificing the electrical conductivity of the interconnector. It was further found that the intermediate layer can complement gas sealing properties of the interconnector and thus can realize good gas sealing properties. Furthermore, it has been found that excellent electrical conductivity and gas sealing properties can be simultaneously realized as a solid oxide fuel cell stack by the two-layer structure of the intermediate layer and the interconnector. The present invention has been made based on such findings.

Thus, an object of the present invention is to provide a solid oxide fuel cell stack including an intermediate layer and an interconnector that have excellent electrical conductivity, gas sealing property, and adhesion to a solid electrolyte.

[Means for Solving the Problems]

According to the present invention, there is provided a solid oxide fuel cell stack comprising:

  a plurality of power generation elements, each of which comprising a fuel electrode, a solid electrolyte, and an air electrode stacked in that order; and
  an interconnector that electrically connects the air electrode in one of adjacent power generation elements in the plurality of the power generation elements to the fuel electrode in the other power generation element, the plurality of power generation elements being connected in series to each other, wherein
  an intermediate layer having a porosity of not more than 1% and an electrical conductivity of not less than 0.05 S/cm is provided between the interconnector and the fuel electrode in the other power generation element,
  in a histogram obtained by an image analysis of a scanning electron microscopic (SEM) image of the intermediate layer observed with a scanning electron microscope,
  the porosity is calculated by the following equation:

$$\text{Porosity (\%) = integral value in low-brightness area} \div \text{integral}$$
$$\text{value of appearance frequency of the whole} \times 100$$

the low-brightness area is an area that has a lower brightness than an average of the maximum and the minimum of the brightness,

the electrical conductivity is obtained by measuring the electrical conductivity of a specimen by a direct current four-terminal method based on JIS (Japanese Industrial Standards) R 1650-2 under an atmospheric environment at 700°C, the specimen being prepared by subjecting a raw material powder for the intermediate layer to uniaxial pressing under a load of 900 kgf/cm$^2$ and firing the pressed product at 1300°C for 2 hours under an atmospheric environment, wherein the intermediate layer is formed of a perovskite oxide represented by $Sr_aLa_bTi_{1-c-d}Nb_cFe_dO_{3-\delta}$ wherein a, b, c, and d are a positive real number that satisfies $0.1 \leq a \leq 0.8$, $0.1 \leq b \leq 0.8$, $0.1 \leq c \leq 0.3$, and $0.3 \leq d \leq 0.6$, and the content of oxygen $(3-\delta)$ is not more than 3.00, the content of the perovskite oxide represented by $Sr_aLa_bTi_{1-c-d}Nb_cFe_dO_{3-\delta}$ in the intermediate layer is not less than 80% by mole, and the interconnector is formed of a perovskite oxide represented by $Sr_xLa_yTiO_{3-\delta}$ wherein x and y are a positive real number that satisfies $0.8 \leq x + y \leq 1.0$ and $0.01 < y \leq 0.1$.

BRIEF DESCRIPTION OF THE DRAWINGS

[Fig. 1A] is a front view of a horizontal-striped solid oxide fuel cell stack according to the present invention.
[Fig. 1B] is a cross-sectional schematic view of four adjacent power generation elements constituting a solid oxide fuel cell stack according to the present invention.
[Fig. 2] is a partial cross-sectional view of a vertical-striped solid oxide fuel cell unit constituting a vertical-striped solid oxide fuel cell stack according to the present invention.
[Fig. 3] is a perspective view illustrating a vertical-striped solid oxide fuel cell stack according to the present invention.
[Fig. 4] is a cross-sectional schematic view illustrating two adjacent power generation elements constituting a solid oxide fuel cell stack according to the present invention.
[Fig. 5] is a cross-sectional schematic view illustrating three adjacent power generation elements constituting a solid oxide fuel cell stack according to the present invention.
[Fig. 6] is a cross-sectional schematic view illustrating three adjacent power generation elements constituting a solid oxide fuel cell stack according to the present invention.
[Fig. 7] is a cross-sectional schematic view illustrating three adjacent power generation elements constituting a solid oxide fuel cell stack according to the present invention.
[Fig. 8] is a cross-sectional schematic view illustrating another embodiment about a portion near three adjacent power generation elements constituting a solid oxide fuel cell stack according to the present invention.
[Fig. 9] is a cross-sectional schematic view illustrating three adjacent power generation elements constituting a solid oxide fuel cell stack according to the present invention.
[Fig. 10] is a cross-sectional schematic view illustrating three adjacent power generation elements constituting a solid oxide fuel cell stack according to the present invention.

DESCRIPTION OF THE INVENTION

Definition

The solid oxide fuel cell stack according to the present invention refers to a solid oxide fuel cell stack that, except that an intermediate layer is provided between an interconnector and a fuel electrode separately from the interconnector and the intermediate layer meets requirements described later, is usually classified or understood as a solid oxide fuel cell stack in the art. The solid oxide fuel cell stack includes at least a plurality of power generation elements, each including at least the fuel electrode, the solid electrolyte, and the air electrode stacked in that order, and an interconnector that electrically connects an air electrode in one of the two adjacent power generation elements in the plurality of power generation elements to a fuel electrode in the other power generation element. The shape of the solid oxide fuel cell stack according to the present invention is not limited and may be, for example, a cylindrical shape or a hollow plate-like shape with a plurality of gas flow paths formed therein.

The expression "adjacent" or "provided adjacent" as used herein means that a plurality of contemplated elements do not include other contemplated element therebetween that is the same type as the contemplated element. Other elements other than the contemplated elements may be included between the contemplated elements. For example, an additional power generation element is not included between one of the adjacent power generation elements and the other power generation element. However, for example, an interconnector can be included between one of the adjacent power generation elements and the other power generation element.

The solid oxide fuel cell stack according to the present invention includes both so-called vertical-striped solid oxide fuel cell and horizontal-striped solid oxide fuel cell. In the present invention, the vertical-striped solid oxide fuel cell refers to a solid oxide fuel cell including one power generation element provided on a surface of one support. The support may also serve as a fuel electrode or an air electrode. For example, a solid oxide fuel cell may be mentioned that includes a fuel electrode also serving as a support and a solid electrolyte and an air electrode stacked in that order on the surface of the fuel electrode. The horizontal-striped solid oxide fuel cell refers to a solid oxide fuel cell including a plurality of power generation elements provided on a surface of one support.

In the present invention, the solid oxide fuel cell stack refers to an assembly of a plurality of power generation elements.

A solid oxide fuel cell system using a solid oxide fuel cell stack according to the present invention is not limited to a specific one, and publicly known manufacturing methods and other materials constituting the solid oxide fuel cell system may be used.

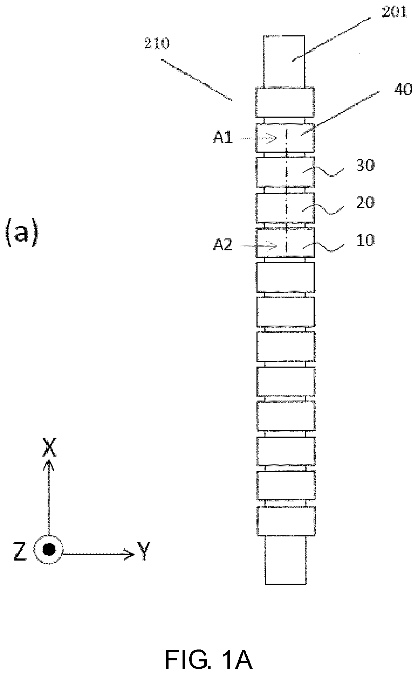

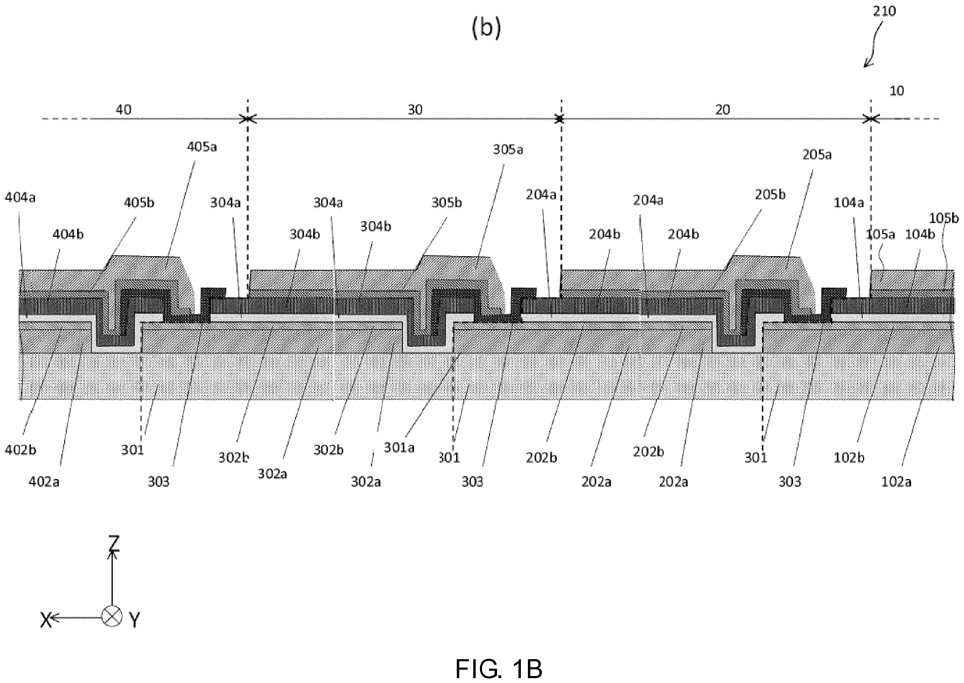

The whole construction and constituent elements of a solid oxide fuel cell stack will be described in reference to Fig. 1(A) and 1(B). Fig. 1(A) is a front view of a horizontal-striped solid oxide fuel cell stack as one embodiment of the present invention. Fig. 1 (B) is a schematic view illustrating one embodiment of a solid oxide fuel cell stack 210 according to the present invention.

Power generation element

As shown in Figs. 1(A) and 1(B), a solid oxide fuel cell stack 210 according to the present invention includes a plurality of power generation elements (10, 20, 30, 40). These power generation elements (10, 20, 30, 40) are connected in series. Each of the power generation elements (10, 20, 30, 40) is a laminate of a fuel electrode (102, 202, 302, 402), a solid electrolyte (104, 204, 304, 404), and an air electrode (105, 205, 305, 405) stacked in that order.

In the present specification, a vertical direction, a stacking direction, from the surface of a support 301 towards a fuel electrode (102, 202, 302, 402), a solid electrolyte (104, 204, 304, 404), and an air electrode (105, 205, 305, 405) in each power generation element (10, 20, 30, 40) is defined as a Z-axis direction. One direction perpendicular to the Z-axis direction is defined as an X-axis direction, and a direction perpendicular to both the Z-axis direction and the X-axis direction is defined as a Y-axis direction. Here the X-axis direction is a direction in which oxide ions move. As illustrated in Figs. 1(A) and 1(B), in the solid oxide fuel cell stack 210, the plurality of power generation elements (10, 20, 30, 40) are arranged along the X-axis direction.

Support

The solid oxide fuel cell stack 210 according to the present invention may include a support 201. When the solid oxide fuel cell stack is a vertical-striped solid oxide fuel cell stack, a support 201 may be present or absent. When the solid oxide fuel cell stack is a horizontal-striped solid oxide fuel cell stack, the support 201 is present. When the support 201 is present, power generation elements (10, 20, 30, 40) are formed that include: the support 201; and a fuel electrode (102, 202, 302, 402), a solid electrolyte (104, 204, 304, 404), and an air electrode (105, 205, 305, 405) stacked in that order on the support 201. When the solid oxide fuel cell stack is a horizontal-striped solid oxide fuel cell stack, a plurality of power generation elements (10, 20, 30, 40) are formed in series on the surface of the support 201.

In the present invention, any type of support may be used without particular limitation as long as the support 201 is porous, is permeable to gas, has a mechanical strength high enough to support the plurality of power generation elements (10, 20, 30, 40) and an electrical insulating property. At least one material selected from the group consisting of MgO, calcia-stabilized zirconia (CSZ), and forsterite may be used as materials for the support 201. The thickness of the support 201 is preferably 0.5 to 2 mm.

Inner electrode and outer electrode

In the present invention, fuel electrodes (102, 202, 302, 402) may be inner electrodes or alternatively may be outer electrodes. That is, each of a plurality of the power generation elements (10, 20, 30, 40) may be a laminate including at least a fuel electrode (102, 202, 302, 402) as an inner electrode, a solid electrolyte (104, 204, 304, 404), and an air electrode (105, 205, 305, 405) as an outer electrode stacked on a surface of each other. Alternatively, each of a plurality of the power generation elements (10, 20, 30, 40) may be a laminate including at least an air electrode (105, 205, 305, 405) as an inner electrode, a solid electrolyte (104, 204, 304, 404), and a fuel electrode (102, 202, 302, 402) as an outer electrode stacked on top of each other.

In a preferred embodiment of the present invention, the inner electrode is a fuel electrode (102, 202, 302, 402). The reason for this is as follows. Specifically, a porous structure having good gas permeability is adopted in the support 201 and current collecting layers, for example, fuel electrode layers 102a, 202a, 302a, 402a, the fuel electrode layers being described later in more detail. The support 201 holds the structure of the power generation elements (10, 20, 30, 40). Accordingly, the thickness of the support 201 is larger than that of the current collecting layer that is merely required to meet an electrical conductivity requirement. That is, the support 201 is likely to have a lower permeability to gas than the current collecting layer. Further, a comparison of the diffusion rate of oxygen gas with that of hydrogen gas has revealed that the diffusion rate of hydrogen gas is a few times higher than that of oxygen gas. Thus, when the inner electrode is an air electrode (105, 205, 305, 405), oxygen having a lower permeability than hydrogen is permeated into the support 201, and, consequently, the gas diffusion overvoltage is larger than that when the inner electrode is a fuel electrode (102, 202, 302, 402). As a result, power generation performance is likely to be lowered. Accordingly, when the inner electrode is the fuel electrode (102, 202, 302, 402), a better power generation performance can be obtained. When the inner electrode is the fuel electrode (102, 202, 302, 402), the outer electrode is the air electrode (105, 205, 305, 405).

Fuel electrode

In the present invention, the fuel electrode (102, 202, 302, 402) has porosity high enough to be permeable to fuel gas, catalytic activity (electrode activity) high enough to adsorb hydrogen, electrical conductivity, and oxide ion conductivity. The porosity of the fuel electrode (102, 202, 302, 402) may be smaller than that of the support 201.

For example, NiO/zirconium-containing oxides and NiO/cerium-containing oxides may be mentioned as materials for constituting the fuel electrode (102, 202, 302, 402), and at least any one of these materials is contained in the fuel electrode (102, 202, 302, 402). Here the NiO/zirconium-containing oxide refers to a homogeneous mixture of NiO and the zirconium-containing oxide at a predetermined ratio. The NiO/cerium-containing oxide refers to a homogeneous mixture of NiO and a cerium-containing oxide at a predetermined ratio. Zirconium-containing oxides of NiO/zirconium-containing oxides include, for example, zirconium-containing oxides doped with one or more of CaO, $Y_2O_3$, and $SC_2O_3$. Cerium-containing oxides of NiO/cerium-containing oxides include compounds of general formula $Ce_{1-y}Ln_yO_2$ wherein Ln is a combination of one or more elements selected from La, Pr, Nd, Sm, Eu, Gd, Tb, Dy, Ho, Er, Tm, Yb, Lu, Sc, and Y; and $0.05 \leq y \leq 0.50$. NiO is reduced under a fuel atmosphere to Ni, and, thus, the oxides are converted to Ni/zirconium-containing oxides or Ni/cerium-containing oxides.

In the present invention, the fuel electrode (102, 202, 302, 402) may have a single-layer structure or a multi-layer structure. An example of the fuel electrode (102, 202, 302, 402) having a multi-layer structure as the inner electrode is a fuel electrode comprising a layer of Ni/YSZ, YSZ being yttria-stabilized zirconia, that is, a fuel electrode layer 102a, 202a, 302a, 402a on the support side and a layer of Ni/GDC, GDC being $Gd_2O_3$-$CeO_2$, that is, a fuel electrode catalyst layer 102b, 202b, 302b, 402b on the solid electrolyte side. The thickness of the fuel electrode (102, 202, 302, 402), that is, the total of the thickness of the fuel electrode layer and the thickness of the fuel electrode catalyst layer is preferably 10 to 200 $\mu$m. In this case, the thickness of the fuel electrode catalyst layer (102b, 202b, 302b, 402b) is preferably 0 to 30 $\mu$m.

Intermediate layer

The solid oxide fuel cell stack 210 according to the present invention includes an intermediate layer 306 between the interconnector 303 and the fuel electrode 302 of the adjacent other power generation element, for example, a second power generation element 30. The intermediate layer 306 has a porosity of not more than 1%, an electrical conductivity of not less than 0.05 S/cm, and is dense and electrically conductive. When a dense intermediate layer 306 is provided between the fuel electrode 302 and the interconnector 303 separately from the interconnector, the incorporation of the interconnector 303 into the fuel electrode 302 in the formation of the interconnector 303 can be suppressed and, the interconnector 303 can be formed as a thin layer. Further, since the intermediate layer 306 is electrically conductive, good electrical conductivity can be obtained without sacrificing the electrical conductivity of the interconnector 303. Further, the gas sealing property of the interconnector 303 can be complemented by the denseness of the intermediate layer 306, and good gas sealing properties can be obtained. As a result, excellent electrical conductivity and gas sealing properties can be simultaneously realized as a solid oxide fuel cell by the two-layer structure of the intermediate layer 306 and the interconnector 303.

Porosity

In the present invention, the porosity of the intermediate layer 306 is not more than 1%. The upper limit of the porosity is preferably not more than 0.5%, more preferably not more than 0.4%. The lower limit of the porosity is preferably not less than 0%. When this requirement is met, the electrical conductivity and gas sealing properties of the interconnector can be complemented. In the present invention, the porosity refers to a porosity measured by the following method.

<Method of obtaining porosity from SEM image>

An SEM image is obtained by cutting out a specimen so as to include an intermediate layer 306 from the solid oxide fuel cell stack and observing the intermediate layer with a scanning electron microscope (for example, S-4100 manufactured by Hitachi, Ltd.;hereinafter referred to also as "SEM") under conditions of an accelerated voltage of 15 kV, a secondary electron image, and a magnification of 100 to 10000 times. The SEM image is evaluated by a software for image processing (for example, Winroofver 6.5.1 manufactured by MITANI CORPORATION). As a result, a histogram including a brightness as abscissa and an appearance frequency as ordinate is obtained. In this histogram, an area where the brightness is lower than the average of the minimum and the maximum of the brightness is regarded as a low-brightness area while an area where the brightness is higher than the average is regarded as a high-brightness area. The low-brightness area is determined as pores and the high-brightness area other than the pores is determined as the intermediate layer for binarization processing. Thereafter, the porosity is obtained by the following equation.

$$\text{Porosity (\%)} = \text{Value of integral in low-brightness area} \div \text{Value of integral of appearance frequency of whole} \times 100$$

In the present invention, in order to confirm that the intermediate layer 306 has a desired porosity obtained by the above method, the porosity determined by the following method can be used as one index.

Method of obtaining porosity by Archimedes method

Specimens are obtained by subjecting a raw material powder for the intermediate layer to uniaxial pressing under a load of 900 kgf/cm$^2$ and firing the pressed product at 1300°C for 2 hours under an atmospheric environment. For the specimens, the porosity is measured by an Archimedes method according to JIS R 1634.

Electrical conductivity

In the present invention, the electrical conductivity of the intermediate layer 306 is not less than 0.05 S/cm, preferably not less than 0.1 S/cm under an atmospheric environment at 700°C. When this requirement is met, the electrical conductivity of the interconnector 303 can be complemented. The higher the electrical conductivity, the better the results. Thus, the upper limit of the electrical conductivity is not present but is preferably not more than 0.16 S/cm, more preferably not more than 0.15 S/cm. In the present invention, the electrical conductivity refers to an electrical conductivity measured by the following method. Specifically, specimens for the measurement of electrical conductivity can be prepared by subjecting a raw material powder for the intermediate layer to uniaxial pressing under a load of 900 kgf/cm$^2$ and firing the pressed product at 1300°C for 2 hours under an atmospheric environment. The electrical conductivity of the specimens is measured by a direct current four-terminal method based on JIS (Japanese Industrial Standards) R 1650-2 under an atmospheric environment at 700°C.

Crystal stability

In the present invention, the intermediate layer 306 does not undergo a change in crystal structure under an atmospheric environment at 700°C or under a reducing atmosphere at 700°C. That is, the crystal of the intermediate layer 306 is stable. When the crystal of the intermediate layer 306 is stable, the intermediate layer 306 is not deteriorated during the operation of the solid oxide fuel cell stack and, thus, the gas sealing property of the interconnector 303 can be complemented. The crystal stability can be evaluated by the following method.

Specimens are obtained by subjecting a raw material powder for the intermediate layer to uniaxial pressing under a load of 900 kgf/cm$^2$ and firing the pressed product at 1300°C for 2 hours under an atmospheric environment. The specimens are heat-treated at 700°C under an atmospheric environment for 10 hours and are then ground in a mortar to a BET of 1 m$^2$/g to 3 m$^2$/g. For the ground product, the diffraction intensity is measured by a powder X-ray diffraction analyzer (XRD) at $2\theta = 20°$ to 90°. Thereafter, the ground products are heat-treated at 700°C under a hydrogen atmosphere for 10 hours. Then, for the ground products thus obtained, the diffraction intensity is measured in the similar measurement manner by a powder X-ray diffraction analyzer (XRD) at $2\theta = 20°$ to 90°. The diffraction strength is compared to confirm that there is no change in crystal structure, thereby confirming that crystals are stable.

Composition

In the present invention, preferably, the intermediate layer 306 is formed of a perovskite oxide represented by general formula $Sr_aLa_bTi_{1-c-d}A_cB_dO_{3-\delta}$ wherein a, b, c, and d are a positive real number that satisfies $0.1 \leq a \leq 0.8$, $0.1 \leq b \leq 0.8$, $0.1 \leq c \leq 0.3$, and $0.3 \leq d \leq 0.6$; A is one or more elements selected from Nb, V, and Ta; and B is one or more elements selected from Fe and Co. Here "formed of" means that the main component of the intermediate layer 306 is a perovskite oxide represented by the general formula $Sr_aLa_bTi_{1-c-d}A_cB_dO_{3-\delta}$. That is, an embodiment where the intermediate layer 306 contains other components, for example, diffusion elements described later is not excluded. In other words, preferably, the intermediate layer 306 contains as a main component a perovskite oxide represented by the general formula $Sr_aLa_bTi_{1-c-d}A_cB_dO_{3-\delta}$. The main component means that, in the intermediate layer 306, the content of the perovskite oxide represented by the general formula $Sr_aLa_bTi_{1-c-d}A_cB_dO_{3-\delta}$, is not less than 80% by mole, preferably not less than 90% by mole, more preferably not less than 95% by mole. Still more preferably, the intermediate layer 306 consists of the perovskite oxide represented by the above general formula only. The composition ratio between Sr and La preferably meets the requirement that $0.1 \leq a \leq 0.8$ and $0.1 \leq$ by 0.8 and the content of oxygen $(3-\delta)$ is not more than 3.00. When this requirement is met, a film that has a low porosity and is dense can be obtained. Further, a stable perovskite structure can be maintained, an impurity phase such as $La_2Ti_2O_7$ is not formed, and poor denseness caused by inhibition of sintering does not occur.

In the intermediate layer 306, whether or not the perovskite oxide is contained can be determined by analyzing the intermediate layer with an X-ray diffraction analyzer (XRD).

The components and the ratio of the components of the perovskite oxide contained in the intermediate layer 306 can be specified by the following method. The intermediate layer is cut out from the prepared solid oxide fuel cell stack and is fabricated into a thin film having a thickness of 100 nm to 200 nm with a focused ion beam-scanning electron microscope, hereinafter referred to as " FIB-SEM". Element mapping is obtained by evaluating the thin film with scanning transmission electron microscope-energy dispersive X-ray spectrometry, hereinafter referred to as "STEM-EDX". The components and the ratio of the components of the perovskite oxide contained in the intermediate layer can be dertermined by quantitatively analyzing the element mapping by a thin-film approximation method.

In the present invention, the intermediate layer 306 may contain, as unavoidable components, elements that are, for example, during firing, diffused into the intermediate layer 306 from other members such as the fuel electrode, the air electrode, the solid electrolyte, the interconnector and the like. Such elements include Ni, Y, Gd, Ce, Zr, La, Sr, Ga, Mg, Co, and Fe. The amount of elements diffused may vary depending, for example, upon constituent materials for each member, crystal structures, firing temperatures, and modes of firing (for example, successive firing or co-firing).

In a preferred embodiment of the present invention, in the perovskite oxide represented by the above general formula, the composition ratio between Sr and La may be determined so that the amount of oxygen can be 2.95 to 3.00. An oxygen amount of not less than 2.95 is advantageous in that a stable perovskite structure can be maintained, an impurity phase such as $TiO_2$ is not produced, and a poor denseness caused by sintering inhibition does not occur.

The amount of oxygen $(3-\delta)$ is a amount of oxygen when, in the perovskite oxide represented by the general formula, the sum of valences of positive ions of each element is equal to the sum of valences of oxide ions that are divalent negative ions. In the present invention, calculation is carried out using valences of the elements, specifically the valence of Sr as divalent, the valence of La and Fe as trivalent, the valence of Ti and Co as tetravalent, and Nb, V, and Ta as pentavalent.

In a preferred embodiment of the present invention, in the perovskite oxide represented by the above general formula, the composition ratio between element A and element B is $0.1 \leq c \leq 0.3$ and $0.3 \leq d \leq 0.6$. The composition ratio of Ti is determined by 1-c-d.

In a preferred embodiment of the present invention, in the perovskite oxide represented by the above general formula, the composition ratio between Sr and La is $0.2 \leq a \leq 0.5$ and $0.4 \leq b \leq 0.7$. More preferably, the composition ratio is $0.29 \leq a \leq 0.4$ and $0.5 \leq b \leq 0.6$. When this requirement is met, an intermediate layer 306 can be formed that has a low porosity and a high electrical conductivity.

In a preferred embodiment of the present invention, in the perovskite oxide represented by the above general formula, the composition ratio between the element A and the element B is $0.1 \leq c \leq 0.25$ and $0.3 \leq d \leq 0.5$.

In a more preferred embodiment of the present invention, in the perovskite oxide represented by the above general formula, the element A is Nb, and the element B is Fe. In this embodiment, in the intermediate layer 306, Ti site in SLT is replaced with Fe as an electrically conductive carrier, contributing to an improvement in electrical conductivity. On the other hand, SLT replaced with Fe is likely to cause oxygen deficiency due to the replacement of Ti site with Fe and thus leading to a tendency that oxide ion conductivity is disadvantageously developed. In the intermediate layer 306 constituting the present invention, however, since Ti site in SLT replaced with Fe is further replaced with pentavalent Nb having a higher valence than tetravalent Ti, the development of the oxide ion conductivity due to oxygen deficiency can be suppressed. That is, the electrical conductivity can be improved by replacing Ti site in SLT with Fe, and the development of the oxide ion conductivity can be suppressed by further replacing with Nb of Ti site in SLT already replaced with Fe. Thus, an intermediate layer 306 can be obtained that can simultaneously realize electrical conductivity and oxide ion insulating property.

In the above embodiment, in the intermediate layer 306, the composition ratio of Fe is regulated in a specific range. That is, the composition ratio of Fe preferably meets the above-defined d range. When this requirement is met, while regulating the diffusion of elements from the intermediate layer 306 into the solid electrolyte (204, 304, 404) during firing, good adhesion between the intermediate layer 306 and the solid electrolyte (204, 304, 404) and good electrical conductivity can be simultaneously realized. Further, preferably, the composition ratio between Fe and Nb falls within a specific range. That is, satisfying the above-defined c and d range is preferred. When this requirement is met, further improved adhesion between the intermediate layer 306 and the solid electrolyte (204, 304, 404) and electrical conductivity can be realized.

Thickness

In a preferred embodiment of the present invention, the thickness of the intermediate layer 306 is larger than that of the interconnector 303. When this requirement is met, the incorporation of the interconnector 303 into the fuel electrode (202, 302, 402) in the formation of the interconnector 303 can be prevented. Here the thickness of the intermediate layer 306 refers to the length along Z-axis direction of the intermediate layer 306 between the fuel electrode (202, 302, 402) and the interconnector 303. Here the thickness of the interconnector 303 refers to the length along the Z-axis direction of the interconnector 303 between the fuel electrode (202, 302, 402) and the air electrode (205, 305 405). Specifically, the thickness of the intermediate layer 306 is preferably 10 μm to 100 μm. When the thickness is not less than 10 μm, gas sealing property can be obtained. Further, when the thickness is not more than 100 μm, electrical conductivity can be obtained. The thickness is more preferably 15 μm to 50 μm. The thickness of the intermediate layer 306 can be determined by the following method. At the outset, the prepared solid oxide fuel cell stack is cut so as to include the intermediate layer 306. The thickness can be determined by observing the cross section three times with a scanning electron microscope (SEM) at a magnification of 30 to 2000 times, adding the maximum and the minimum of the obtained values and dividing the sum by 2.

Interconnector

Composition

In the present invention, an interconnector 303 is formed of ceramic. That is, in the present invention, the interconnector refers to a ceramic interconnector. Preferably, the interconnector 303 is formed of a perovskite oxide represented by general formula $Sr_xLa_yTiO_{3-\delta}$ wherein x and y are a positive real number that meets $0.8 \leq x + y \leq 1.0$ and $0.01 < y \leq 0.1$. Here "formed of" means that the main component of the interconnector 303 is a perovskite oxide represented by the general formula $Sr_xLa_yTiO_{3-\delta}$. That is, an embodiment where the interconnector 303 contains other components, for example, diffusion elements described later is not excluded. In other words, preferably, the interconnector 303 contains as a main component a perovskite oxide represented by the general formula $Sr_xLa_yTiO_{3-\delta}$. The main component means that, in the interconnector 303, the content of the perovskite oxide represented by the general formula $Sr_xLa_yTiO_{3-\delta}$ is not less than 80% by mole, preferably not less than 90% by mole, more preferably not less than 95% by mole. Still more preferably, the interconnector consists of the perovskite oxide represented by the above general formula only. When the main component of the interconnector 303 is an oxide having the above composition ratio, satisfactory denseness and electrical conductivity can be simultaneously realized. The interconnector 303 develops electrical conductivity when the interconnector 303 includes $SrTiO_3$ as a base with La replaced. In a preferred embodiment of the present invention, the composition ratio between Sr and La meets $0.8 \leq x + y \leq 0.9$, $0.01 < y \leq 0.1$. When this requirement is met, the denseness is further enhanced. Further, Ti can be replaced with Nb. This can further enhance the electrical conductivity. Specific examples of such oxides include $Sr_xLa_yTi_{1-z}Nb_zO_{3-\delta}$ wherein $0.8 \leq x + y \leq 1.0$, $0.01 < y \leq 0.1$, and $0.05 \leq z \leq 0.2$.

In the present invention, the interconnector 303 may contain, as unavoidable components, elements that are, for example, in firing, diffused into the interconnector 303 from other members, that is, for example, the fuel electrode (202, 302, 402), the air electrode (205, 305, 405), the solid electrolyte (204, 304, 404), and the intermediate layer 306. Such elements include, for example, Ni, Y, Gd, Ce, Zr, La, Sr, Ga, Mg, and Co. The amount of elements diffused may vary depending, for example, upon constituent materials for each member, crystal structure, firing temperature, and mode of firing, for example, successive firing or co-firing.

In the interconnector 303, whether or not the perovskite oxide is contained can be determined by the same method as described above in connection with the intermediate layer 306.

The components and the ratio of the components in the perovskite oxide contained in the interconnector 303 can be obtained in the same manner as described above in connection with the intermediate layer 306.

In the present invention, preferably, the interconnector 303 is free from Fe. When this requirement is met, the development of oxide ion conductivity can be suppressed. When the intermediate layer 306 contains Fe, difficulties are encountered in fully suppressing oxide ion conductivity. Therefore, when the intermediate layer 306 is used as an interconnector, the oxide ion conductivity cannot be fully suppressed, leading to a possibility that oxide ions are leaked. This disadvantageously causes lowered output of the fuel cell. Accordingly, in the present invention, the interconnector 303 and the intermediate layer 306 are provided as layers separately from each other.

Thickness

The thickness of the interconnector 303 is preferably smaller than that of the intermediate layer 306. Specifically, the thickness of the interconnector 303 is preferably 5 μm to 15 μm.

Electrical conductivity

In the present invention, the electrical conductivity of the interconnector is preferably not less than 0.01 S/cm, more preferably not less than 0.02 S/cm. The higher the electrical conductivity, the better the results. Thus, the upper limit of the electrical conductivity is not present but is preferably not more than 0.1 S/cm, more preferably not more than 0.04 S/cm. The electrical conductivity can be measured in the same manner as described above in connection with the electrical conductivity of the intermediate layer 306.

Porosity

In the present invention, the porosity of the interconnector is preferably not less than 0.8%, more preferably not less than 1%. The upper limit of the porosity is preferably not more than 2.4%, more preferably not more than 1.7%. The porosity can be measured by the above-described method in which the porosity is obtained from SEM images.

Electrically conductive portion

In the present invention, the intermediate layer 306 and the interconnector 303 integrally functions to electrically connect an air electrode in one of adjacent power generation elements in a plurality of power generation elements to a fuel electrode in the other power generation element. Accordingly, in the present invention, an integral construction of the intermediate layer 306 and the interconnector 303 is defined as the electrically conductive portion.

In the present invention, the electrical conductivity of the electrically conductive portion is preferably not less than 0.03 S/cm, more preferably not less than 0.05 S/cm. The higher the electrical conductivity, the better the results. Thus, the upper limit of the electrical conductivity is not present but is preferably not more than 0.15 S/cm, more preferably not more than 0.13 S/cm. When this requirement is met, a lowering in output in the electrically conductive portion can be suppressed, and the solid oxide fuel cell stack can exert a high power generation performance.

The electrical conductivity of the electrically conductive portion can be determined by the following method. Under evaluation conditions described later, a potential wire and a current wire are connected both to the fuel electrode in adjacent one power generation element and to the interconnector, and, while allowing a current to flow, a potential difference A is measured between the interconnector 303 and a fuel electrode terminal in the adjacent one power generation element. Thereafter, a through-hole is provided so as to penetrate the interconnector 303 and the intermediate layer 306 and reach the fuel electrode in the adjacent one power generation element, and a potential wire and a current wire are connected through a Ag paste to the fuel electrode under the through-hole. A potential wire and a current wire are also connected to the fuel electrode in the adjacent other power generation element. While allowing a current to flow, a potential difference B is measured between the terminal of the fuel electrode in the adjacent other power generation element under the through-hole in the interconnector and the terminal of the fuel electrode in the adjacent other power generation element. The electrical conductivity is determined by the following equation using measured potential differences.

$$\text{Electrical conductivity} = \text{current} \div (\text{potential difference A} - \text{potential}$$
$$\text{difference B}) \times (\text{thickness of interconnector 303} + \text{thickness of intermediate}$$
$$\text{layer 306}) \div \text{electrically conductive area of interconnector 303}$$

The electrically conductive area of the interconnector 303 refers to an area of the interconnector 303 held between the air electrode and the intermediate layer and may be determined, for example, with a vernier caliper.

Evaluation conditions

Fuel gas: mixed gas composed of ($H_2$+3%$H_2O$) and $N_2$ (mixing ratio being $H_2$ : $N_2$ = 7 : 4 (vol : vol))
Oxidizing gas: air
Operation temperature: 700°C
Current : 1 A

Air electrode

In the present invention, the air electrode (105, 205, 305, 405) has porosity high enough to be permeable to oxygen, catalytic activity, i.e., electrode activity, high enough to adsorb oxygen or to ionize oxygen, electrical conductivity, and oxide ion conductivity. The porosity and electrical conductivity of the air electrode (105, 205, 305, 405) each may be lower than those of the current collecting layer.

Materials that constitute air electrodes (105, 205, 305, 405) include, for example, lanthanum cobalt-based oxides such as $La_{1-x}Sr_xCoO_3$ wherein x = 0.1 to 0.3, and $LaCo_{1-x}Ni_xO_3$ wherein x = 0.1 to 0.6, and lanthanum ferrite-based oxides that are solid solutions composed of $LaSrFeO_3$-based compounds and $LaSrCoO_3$-based compounds such as $La_{1-m}Sr_mCO_{1-n}Fe_nO_3$ wherein 0.05 < m < 0.50 and 0 < n < 1. The air electrode (105, 205, 305, 405) may have a single-layer structure or a multi-layered structure. An example of an outer electrode that is an air electrode (105, 205, 305, 405) having a multi-layered structure is $La_{0.6}Sr_{0.4}CO_{0.2}Fe_{0.8}O_3$, that is, an air electrode catalyst layer 105b, 205b, 305b, 405b on the solid electrolyte side, and $La_{0.6}Sr_{0.4}CO_{0.2}Fe_{0.8}O_3$ that is, an air electrode layer 105a, 205a, 305a, 405a, on the uppermost layer. The thickness of the air electrode, that is, the total thickness of the air electrode layer and the thickness of the air electrode catalyst layer, is preferably 0.2 to 30 $\mu$m.

Solid electrolyte

In the present invention, the solid electrolyte (104, 204, 304, 404) has oxide ion conductivity, gas sealing property, and electrical insulating property. Materials that constitute the solid electrolyte (104, 204, 304, 404) include lanthanum gallate-based oxides and stabilized zirconia with one or more elements selected from Y, Ca, and Sc dissolved in solid solution as solid solution species. In the present invention, suitable solid electrolytes (104, 204, 304, 404) include lanthanum gallate-based oxides (LSGMs) doped with Sr and Mg, more preferably lanthanum gallate-based oxides (LSGMs) represented by general formula $La_{1-a}Sr_aGa_{1-b-c}Mg_bCo_cO_{3-\delta}$ wherein 0.05 ≤ a ≤ 0.3, 0 < b < 0.3, and 0 ≤ c ≤ 0.15; and $\delta$ is a value that is determined so as to meet charge neutralization conditions. LSGM develops oxide ion conductivity, LSGM including $LaGaO_3$ as a base, La sites having been replaced with Sr. The solid electrolyte (104, 204, 304, 404) may have a single-layer structure or a multi-layered structure. When the solid electrolyte (104, 204, 304, 404) has a multi-layered structure, for example, a reaction inhibitory layer (104a, 204a, 304a, 404a) may be provided between the fuel electrode (102, 202, 302, 402) and the solid electrolyte layer (104b, 204b, 304b, 404b) formed of LSGM. Ceria with La dissolved in solid solution ($Ce_{1-x}La_xO_2$ wherein 0.3 < x < 0.5), preferably $Ce_{0.6}La_{0.4}O_2$, may be mentioned as a specific example of the reaction inhibitory layer (104a, 204a, 304a, 404a). The thickness of the solid electrolyte (104, 204, 304, 404), that is, the total thickness of the solid electrolyte layer and the reaction inhibitory layer is preferably 5 to 60 $\mu$m. The thickness of the reaction inhibitory layer (104a, 204a, 304a, 404a) is preferably 0 to 20 $\mu$m.

In the present invention, preferably, both the solid electrolyte (104, 204, 304, 404) and the intermediate layer 306 contain strontium. In a preferred embodiment of the present invention, the amount of strontium contained in the solid electrolyte is lower than that contained in the intermediate layer. Specifically, preferably, the solid electrolyte contains strontium in such an amount that the content of strontium in terms of element excluding oxygen in the composition is not more than 15% by mole, more preferably 2.5% by mole or more to 15% by mole or less. That is, preferably, the solid electrolyte contains lanthanum gallate-based oxides (LSGMs) represented by general formula $La_{1-a}Sr_aGa_{1-b-c}Mg_bCo_cO_{3-\delta}$ wherein 0.05 ≤ a ≤ 0.3, 0 < b < 0.3, and 0 ≤ c ≤ 0.15; and $\delta$ is a value that is determined so as to meet charge neutralization conditions.

Current collecting layer

The solid oxide fuel cell stack according to the present invention includes a current collecting layer that electrically connects the outer electrode to the interconnector. The current collecting layer has gas (oxygen) permeability and electrical conductivity high enough to realize smooth flow of electrons produced by the air electrode. In the present invention, when the outer electrode is an air electrode, the current collecting layer can be formed by baking an electrically conductive paste containing a noble metal such as Ag or Pt or a paste containing an electrically conductive oxide such as $La_{0.6}Sr_{0.4}CO_{0.2}Fe_{0.8}O_{3-\delta}$ When the outer electrode is a fuel electrode, the current collecting layer can be formed by baking a paste containing NiO or oxides of metals such as Ni that, when reduced, develop electrical conductivity, or metals. Preferably, the current collecting layer has a porous or mesh structure from the viewpoint of providing gas permeability. The thickness of the current collecting layer is preferably 10 to 200 μm.

Structure of solid oxide fuel cell stack

With reference to Fig. 1(A) and Fig. 1(B), the structure of the solid oxide fuel cell stack is further described. As illustrated in Fig. 1(A), a horizontal-striped solid oxide fuel cell stack 210 includes 13 power generation elements connected in series on a support 201. Power generation elements 10, 20, 30, and 40 are four power generation elements continuously adjacent to each other.

Fig. 1 (B) illustrates four adjacent power generation elements 10, 20, 30, 40 in a horizontal-striped solid oxide fuel cell stack 210. The solid oxide fuel cell stack 210 in Fig. 1 (B) is of a type in which the inner electrode is a fuel electrode 102, 202, 302, 402. The solid oxide fuel cell stack 210 includes a support 301, first/second fuel electrode, that is, fuel electrode layers 102a, 202a, 302a, 402a, and fuel electrode catalyst layers 102b, 202b, 302b, 402b, first/second solid electrolytes, that is, reaction inhibitory layers 104a, 204a, 304a, 404a, and solid electrolyte layers 104b, 204b, 304b, 404b, air electrodes 105b, 205b, 305b, 405b, current collecting layers 105a, 205a, 305a, 405a, and an interconnector 303. Here first/second means that the structure is a single-layer or two-layer structure and, in two layers, has a first layer and a second layer.

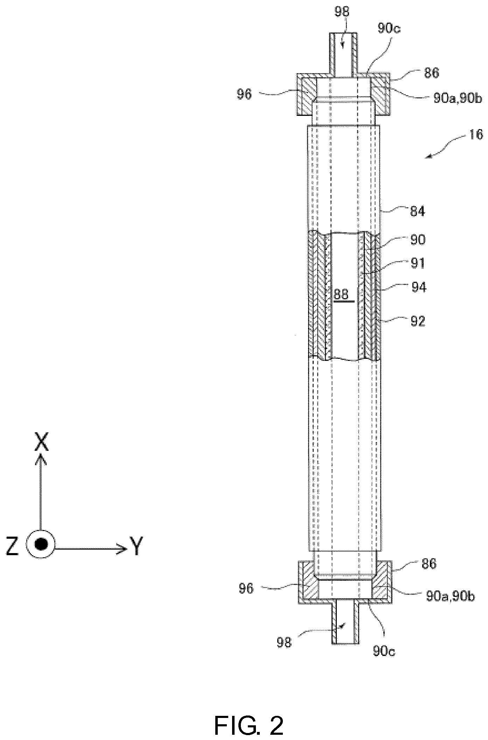

Fig. 2 is a partial cross-sectional view of a vertical-striped solid oxide fuel cell unit constituting a vertical-striped solid oxide fuel cell stack that is one embodiment of the present invention. The vertical-striped solid oxide fuel cell unit 16 includes a fuel cell 84 and an inner electrode terminal 86 connected to an upper directional end and a lower directional end of the fuel cell 84. The fuel cell 84 is a vertically extended tubular structure and includes: a cylindrical porous support 91 with a fuel gas flow path 88 provided in its interior; and, an inner electrode layer 90 provided on a surface of the porous support 91, an outer electrode layer 92, and a solid electrolyte 94 provided between the inner electrode layer 90 and the outer electrode layer 92. In the vertical-striped solid oxide fuel cell stack, the interconnector and the air electrode are connected to each other through a metal such as Ag or an electrically conductive ceramic.

Since the inner electrode terminal 86 mounted on the upper end side in the fuel cell 84 and the inner electrode terminal 86 mounted on the lower end side in the fuel cell 84 have an identical structure, a detailed explanation will be made on the inner electrode terminal 86 mounted on the upper end side. An upper part 90a of the inner electrode layer 90 includes an outer peripheral face 90b and an upper end face 90c exposed to the solid electrolyte 94 and the outer electrode layer 92. The inner electrode terminal 86 is connected to the outer peripheral face 90b of the inner electrode layer 90 through an electrically conductive sealing material 96 and is in directly contact with the upper end face 90c of the inner electrode layer 90, thereby being electrically connected to the inner electrode layer 90. A fuel gas flow path 98 in communication with the fuel gas flow path 88 in the inner electrode layer 90 is provided at the central portion of the inner electrode terminal 86.

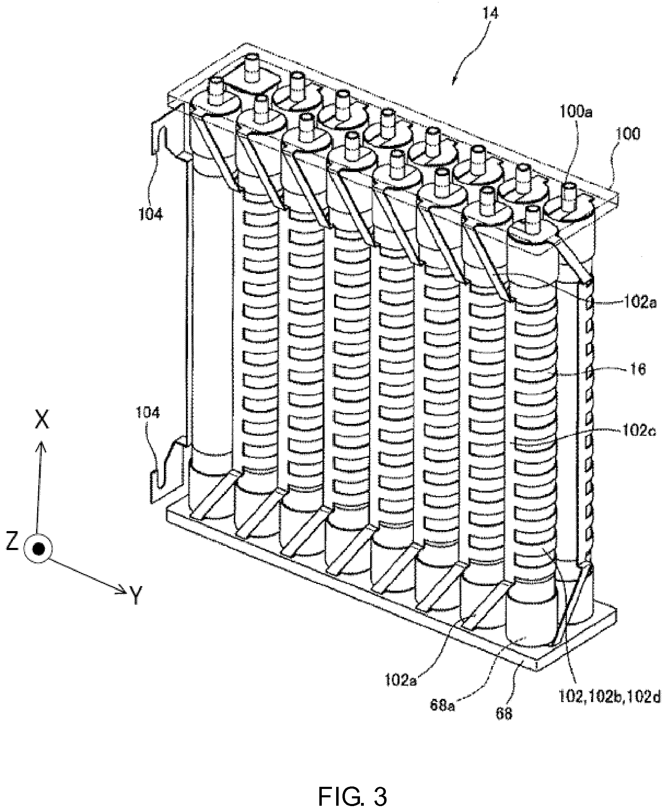

Fig. 3 is a perspective view of a vertical-striped solid oxide fuel cell stack as one embodiment of the present invention. The vertical-striped solid oxide fuel cell stack 14 includes 16 vertical-striped solid oxide fuel cell units 16. The lower end side and the upper end side of the vertical-striped solid oxide fuel cell unit 16 are supported by ceramic lower support plate 68 and upper support plate 100, respectively. Through-holes 68a and 100a through which the inner electrode terminal 86 can be penetrated are provided in these lower support plate 68 and upper support plate 100, respectively.

A current collector 102 and an external terminal 104 are mounted in the vertical-striped solid oxide fuel cell unit 16. The current collector 102 is integrally formed by a fuel electrode connector 102a electrically connected to the inner electrode terminal 86 mounted on the inner electrode layer 90 as the fuel electrode, and an air electrode connector 102b electrically connected to the whole outer peripheral face of the outer electrode layer 92 as the air electrode. The air electrode connector 102b includes a vertical portion 102c vertically extended on the surface of the outer electrode layer 92, and a number of horizontal portion 102b horizontally extended from the vertical portion 102c along the surface of the outer electrode layer 92. Further, the fuel electrode connector 102a is linearly extended from the vertical portion 102c of the air electrode connector 102b in an obliquely upper or lower direction towards the inner electrode terminal 86 located in the upper and lower directions of the fuel cell unit 16.

An external terminal 104 is connected to the inner electrode terminal 86 on the upper end of a vertical-striped solid oxide fuel cell unit 16. An external terminal 104 is connected to the inner electrode terminal 86 on the lower end of a vertical-striped solid oxide fuel cell unit 16. The two vertical-striped solid oxide fuel cell units 16 are located at the ends (back side and front side at the left end in Fig. 3) of the vertical-striped solid oxide fuel cell stack 14. These external terminals 104 are connected to external terminals 104 (not shown) in the vertical-striped solid oxide fuel cell units 16 located at the ends of the adjacent vertical-striped solid oxide fuel cell stack 14, and, as described above, all of 16 vertical-striped solid oxide fuel cell units 16 are connected in series.

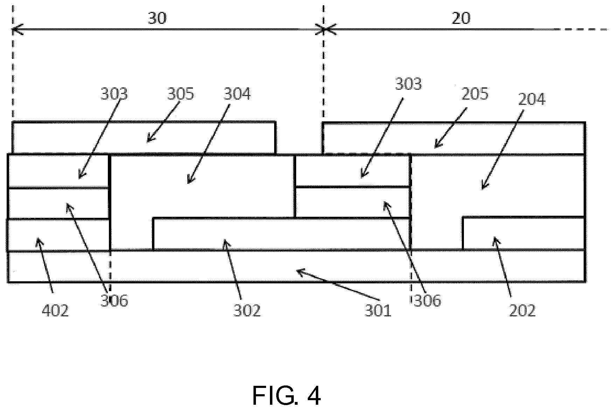

Fig. 4 is a schematic view illustrating one embodiment of the solid oxide fuel cell stack according to the present invention and illustrates two power generation elements adjacent to each other in a horizontal-striped solid oxide fuel cell stack. A fuel electrode (202, 302, 402), a solid electrolyte (204, 304), and an air electrode (205, 305) are stacked in that order on a surface of a support 301. An air electrode 205 in the adjacent one power generation element 20 is electrically connected through an interconnector 303 to a fuel electrode 302 in the adjacent other power generation element 30. An intermediate layer 306 is provided between the fuel electrode 302 in the other power generation element and the interconnector 303.

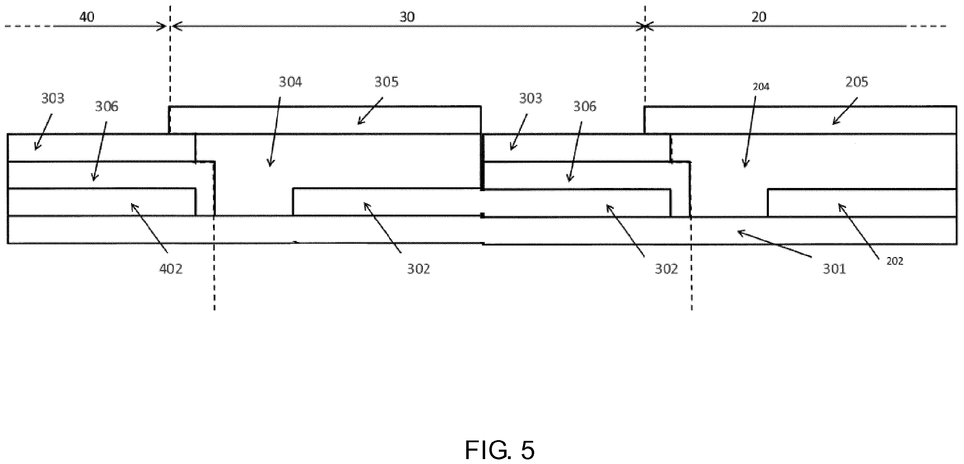

Fig. 5 is a schematic view illustrating one embodiment of the solid oxide fuel cell stack according to the present invention and illustrates three power generation elements adjacent to each other in a horizontal-striped solid oxide fuel cell stack. In Fig. 5, unlike Fig. 4, the intermediate layer 306 covers a side face of the fuel electrode 302 in the other power generation element (for example, the second power generation element 30).

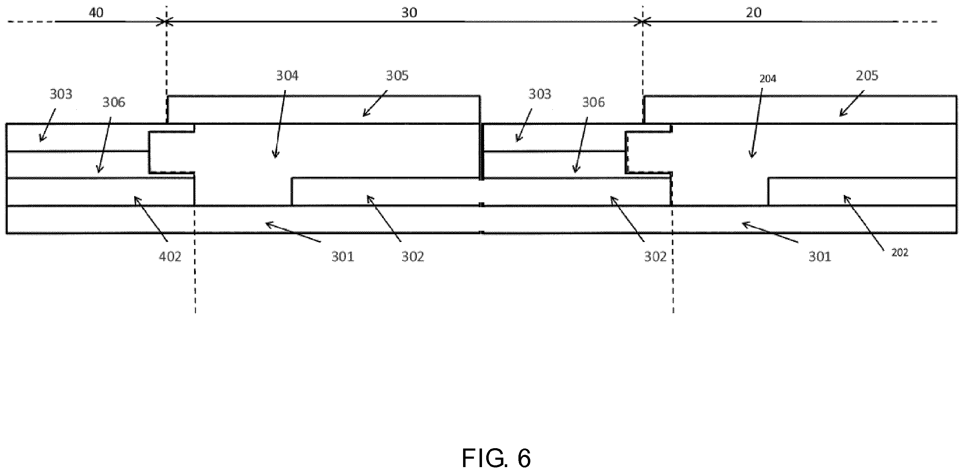

Fig. 6 is a schematic view illustrating one embodiment of the solid oxide fuel cell stack according to the present invention and illustrates three power generation elements adjacent to each other in a horizontal-striped solid oxide fuel cell stack. In Fig. 6, unlike 4, a solid electrolyte 204 in one power generation element (for example, a first power generation element 20) is provided between the intermediate layer 306 and the interconnector 303.

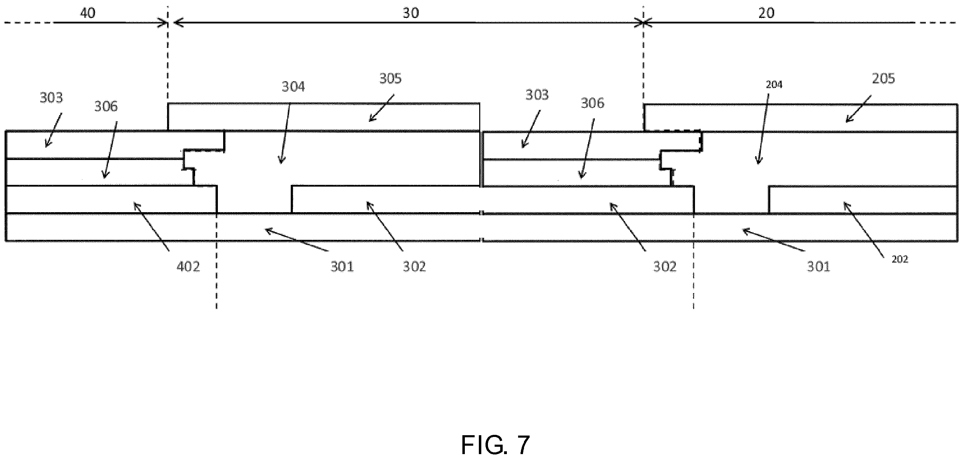

Fig. 7 is a schematic view illustrating one embodiment of the solid oxide fuel cell stack according to the present invention and illustrates three power generation elements adjacent to each other in a horizontal-striped solid oxide fuel cell stack. In Fig. 7, unlike Fig. 4, a solid electrolyte (204) in one power generation element, for example, a first power generation element 20, is provided between the intermediate layer 306 and the interconnector 303. A solid electrolyte 204 in one power generation element 20 is in contact with a part of the surface of the fuel electrode 302 in the other power generation element, for example, a second power generation element 30.

Since the solid electrolyte, for example, 204, is dense, the provision of the solid electrolyte, for example, 204, between the intermediate layer 306 and the interconnector 303 can contributes to a further improvement in gas sealing property.

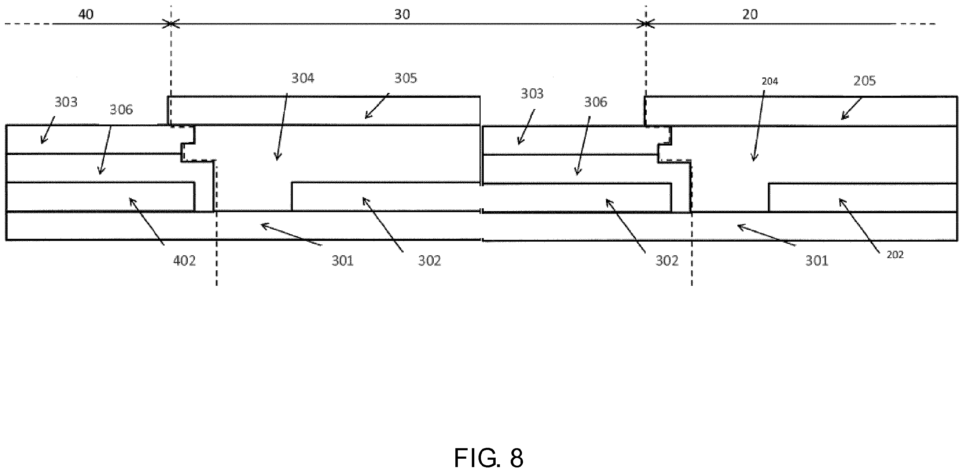

Fig. 8 is a schematic view illustrating one embodiment of the solid oxide fuel cell stack according to the present invention and illustrates three power generation elements adjacent to each other in a horizontal-striped solid oxide fuel cell stack. In Fig. 8, unlike Fig. 4, the intermediate layer 306 covers a side face of the fuel electrode 302 in the other power generation element, for example, a second power generation element 30, and a solid electrolyte 204 in one power generation element, for example, a first power generation element 20, is provided between the intermediate layer 306 and the interconnector 303.

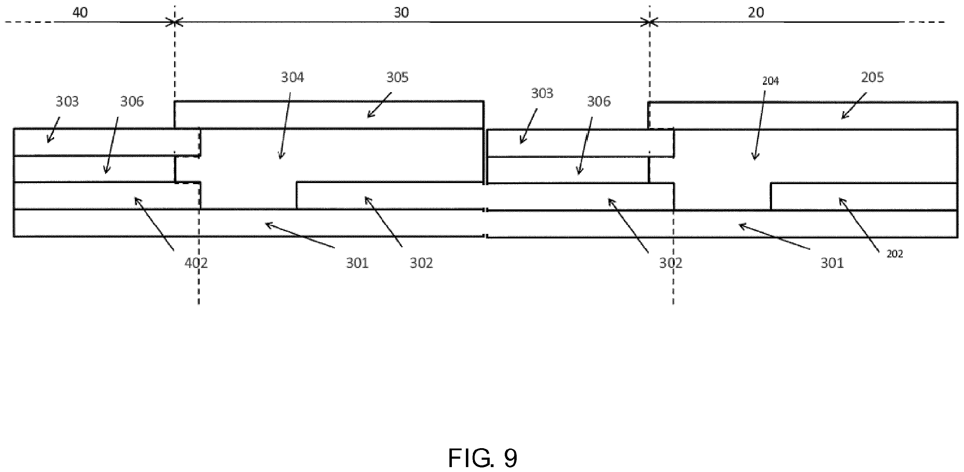

Fig. 9 is a schematic view illustrating one embodiment of the solid oxide fuel cell stack according to the present invention and illustrates three power generation elements adjacent to each other in a horizontal-striped solid oxide fuel cell stack. In Fig. 9, unlike Fig. 4, both an intermediate layer 306 and a solid electrolyte 204 in one power generation element, for example, a first power generation element 20, are provided between the fuel electrode 302 in the other power generation element, for example, a second power generation element 30, and the interconnector 303.

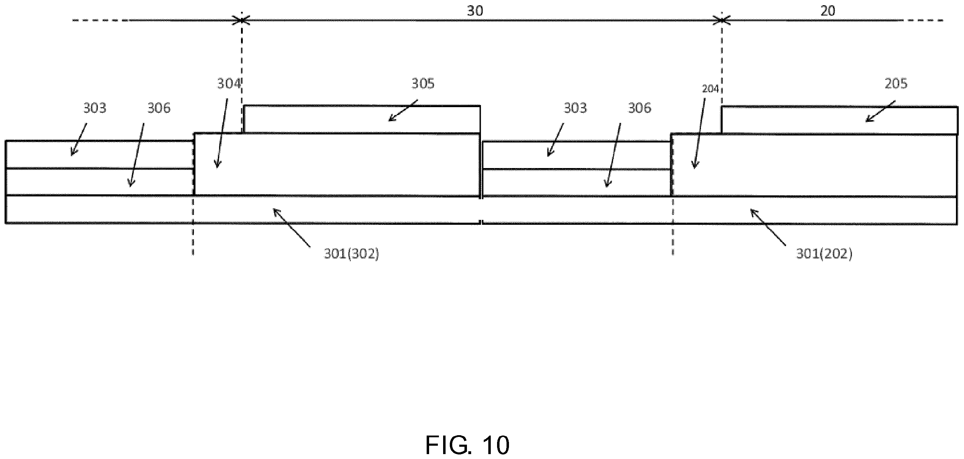

Fig. 10 is a schematic view illustrating one embodiment of the solid oxide fuel cell stack according to the present invention and illustrates three power generation elements adjacent to each other in a vertical-striped solid oxide fuel cell stack. In Fig. 10, a solid electrolyte (204, 304) and an air electrode (205, 305) are successively stacked on a surface of a fuel electrode (202, 302) serving also as a support 301. An intermediate layer 306 is provided between the fuel electrode (202, 302) serving also as the support 301 and the interconnector 303.

Method for manufacturing solid oxide fuel cell stack

The solid oxide fuel cell stack according to the present invention may be manufactured by any method without particular limitation to particular method. For example, the solid oxide fuel cell stack according to the present invention can be manufactured as follows. The manufacturing method is described by taking, as an example, a fuel electrode as an inner electrode and an air electrode as an outer electrode.

For example, the support can be prepared as follows. At the outset, a solvent (for example, water or alcohol) is added to a raw material powder to prepare a green body. In this case, dispersants, binders, defoamers, or pore forming agents or a combination thereof may be added as optional ingredients. For example, sheet molding, press molding, and extrusion molding are used for molding of the green body. When a support with a gas passage formed in the interior thereof is molded, extrusion molding is preferably used. When a support having a multi-layered structure is molded, in addition to multi-layer extrusion molding in which a plurality of layers are extruded at a time, a method in which the upper layer is formed by coating or printing may also be used. Specific examples of coating methods include slurry coating methods in which a raw material slurry is coated, tape casting methods, doctor blade methods, and transfer methods. Specific examples of printing methods include screen printing methods and ink jet printing methods. Next, the prepared green body is molded, and the molded product is dried to obtain a support precursor. Thereafter, a preferred method may be adopted in which the support precursor is then calcined (800°C (inclusive) to 1100°C (exclusive)) to obtain a porous calcination product for the support and the calcination product for the support is solely fired to obtain a support. Alternatively, the calcination product for the support, together with at least a fuel electrode and others, may be fired to obtain a support. The firing is preferably carried out at 1100°C (inclusive) to 1400°C (exclusive).

For example, the intermediate layer and the interconnector can be prepared as follows. At the outset, each raw material powder is prepared. The raw material powder can be prepared, for example, by a solid phase method. That is, powders of metal oxides as the raw material are weighed so as to provide a desired composition ratio. The powders are mixed in a solution, and the solvent is removed to obtain a powder. The powder is fired, for example, at 1150°C, followed by grinding to prepare a raw material powder. A solvent (for example, water or alcohol) and, if necessary, molding assistants such as dispersants and binders are added to the raw material powder to prepare a slurry or a paste. An intermediate layer and an interconnector can be obtained by coating the slurry or the paste, drying the slurry or the paste coating (80°C or more to 1100°C or less, preferably 300°C or more to 1100°C or less) to form a dried film and firing the film (1100°C (inclusive) to 1400°C (exclusive), preferably 1250°C (inclusive) to 1400°C (exclusive)). The coating may be carried out by the same method as described above. Alternatively, a method may be adopted in which each dried film is previously formed as a transfer sheet and the transfer film is applied to a lamination body.

For example, the fuel electrode, the solid electrolyte, and the air electrode can be prepared as follows. A solvent, for example, water or alcohol, and, if necessary, molding assistants such as dispersants and binders are added to the raw material powder to prepare a slurry or a paste. The fuel electrode, the solid electrolyte, and the air electrode can be obtained by coating the slurry or the paste, drying the slurry or the paste (80°C or more to 1100°C or less, preferably 300°C or more to 1100°C or less) to form a dried film and firing the film (1100°C (inclusive) to 1400°C (exclusive), preferably 1250°C (inclusive) to 1400°C (exclusive)). The coating may be carried out by the same method as described above. Alternatively, a method may be adopted in which each dried film is previously formed as a transfer sheet and the transfer film is applied to a lamination body.

In a preferred embodiment of the manufacturing method according to the present invention, firing is preferably carried out for each layer formation. That is, the manufacturing method includes at least the steps of: forming a dried film for a fuel electrode on a surface of a support or a calcination product for the support and then firing the dried film to form a fuel electrode; forming a dried film for a solid electrolyte and firing the dried film to form a solid electrolyte; forming a dried film for an intermediate layer and firing the dried film to form an intermediate layer; forming a dried film for an interconnector and then firing the dried film to form an interconnector; and forming a dried film for an air electrode and firing the dried film to form an air electrode. A current collecting layer is formed after the formation of the air electrode.

In another preferred embodiment of the manufacturing method according to the present invention, the manufacturing method includes the step of: preparing a support or a calcination product for the support, forming, on a surface of the support or the calcination product for the support, a dried film for a fuel electrode, a dried film for an intermediate layer, and a dried film for a solid electrolyte, co-firing (1250°C (inclusive) to 1400°C (exclusive)) a stacked molded body including the support and the dried films of the fuel electrode, the intermediate layer, and the solid electrolyte, then forming a dried film for an interconnector, firing the dried film to form an interconnector (1100°C (inclusive) to 1400°C (exclusive), preferably 1200°C (inclusive) to 1400°C (exclusive)), forming a dried film for an air electrode, and firing the whole.

In the above embodiment of the manufacturing method according to the present invention, after the formation of the dried films of the fuel electrode, the intermediate layer, and the solid electrolyte on the support or the calcination product for the support, co-firing is carried out in which the stacked molded body of these elements is fired at a time. In this embodiment, preferably, the firing is carried out under an oxidizing atmosphere so as to prevent a deterioration in the solid electrolyte and the intermediate layer, for example, by diffusion of dopant. More preferably, the firing is carried out using a mixed gas composed of air and oxygen under an atmosphere having an oxygen concentration of 20% by mass or more to 30% or more by mass.

In the above embodiment of the manufacturing method according to the present invention, preferably, at least intermediate layer and the solid electrolyte are obtained by co-firing. In the firing, elements contained in the intermediate layer and elements contained in the solid electrolyte are mutually diffused. When elements contained in the intermediate layer are the same as elements contained in the solid electrolyte, these elements are mutually diffused. Such elements include strontium and lanthanum. By virtue of this construction, the adhesion between the intermediate layer and the solid electrolyte can be improved.

EXAMPLES

The present invention is further illustrated by the following Examples and Comparative Examples that are not intended as a limitation of the scope of the present invention.

Example 1

Preparation of green body A for support

A raw material powder of a high-purity forsterite ($Mg_2SiO_4$ containing 0.05% by mass of CaO) was regulated to a mean particle diameter of 0.7 $\mu$m. 100 parts by weight of this powder, 20 parts by weight of a solvent (water), 8 parts by weight of a binder (methylcellulose), 0.5 part by weight of a lubricant, and 15 parts by weight of a pore forming agent (acrylic resin particles having a mean particle diameter of 5 $\mu$m) were mixed in a rapid mixer, the mixture was kneaded in a kneader, the kneaded product was deaerated with a vacuum pug mill to prepare a green body for extrusion molding The mean particle diameter was measured according to JIS R1629 and expressed in terms of 50% diameter (the same shall apply hereinafter).

Preparation of slurry for fuel electrode layer

A NiO powder and a 10YSZ (10 mol% $Y_2O_3$-90 mol% $ZrO_2$) power were mixed together by wet mixing at a weight ratio of 65 : 35 to obtain a dry powder. The dry powder thus obtained was regulated to a mean particle diameter of 0.7 $\mu$m. 150 parts by weight of this powder and 100 parts by weight of a solvent (carbitol) were mixed with 6 parts by weight of a binder (a soluble polymer), 2 parts by weight of a dispersant (a nonionic surfactant), and 2 parts by weight of an defoamer (organic polymeric substance-based). The mixture was thoroughly stirred to prepare a slurry.

Preparation of slurry for fuel electrode catalyst layer

A mixture of a NiO powder and a GDC10 (10 mol% $GdO_{1.5}$-90 mol% $CeO_2$) powder was prepared by a coprecipitation method and was heat-treated to obtain a powder for a fuel electrode catalyst layer. The mixing ratio between the NiO powder and the GDC10 powder was 50/50 in terms of weight ratio. The mean particle diameter of the powder for the fuel electrode catalyst layer was regulated to a mean particle diameter of 0.5 $\mu$m. 100 parts by weight of this powder was mixed with 100 parts by weight of a solvent (carbitol), 5 parts by weight of a binder (a soluble polymeric substance), 2 parts by weight of a dispersant (nonionic surfactant), and 2 parts by weight of an defoamer (an organic polymeric substance). The mixture was thoroughly stirred to prepare a slurry.

Preparation of slurry for reaction inhibitory layer

50 parts by weight of a powder of cerium-based composite oxide LDC40 (40 mol% $LaO_{1.5}$-60 mol% $CeO_2$) was used as a material for a reaction inhibitory layer. 0.04 part by weight of a $Ga_2O_3$ powder was mixed into the material powder as a sintering aid. Further, 100 parts by weight of a solvent (carbitol), 4 parts by weight of a binder (a soluble polymeric substance), 1 part by weight of a dispersing agent (a nonionic surfactant), and 1 part by weight of an defoamer (a organic polymeric substance) were mixed thereinto, and the mixture was thoroughly stirred to prepare a slurry.

Preparation of slurry for solid electrolyte

An LSGM powder having a composition of $La_{0.9}Sr_{0.1}Ga_{0.8}Mg_{0.2}O_3$ was used as a material for a solid electrolyte. 50 parts by weight of this LSGM powder was mixed with 100 parts by weight of a solvent (carbitol), 4 parts by weight of a binder (a soluble polymeric substance), 1 part by weight of a dispersant (a nonionic surfactant), and 1 part by weight of an defoamer (an organic polymeric substance). The mixture was thoroughly stirred to prepare a slurry.

Preparation of slurry for air electrode

A powder having a composition of $La_{0.6}Sr_{0.4}CO_{0.2}Fe_{0.8}O_3$ was used as a material for an air electrode. 40 parts by weight of this powder was mixed with 100 parts by weight of a solvent (carbitol), 2 parts by weight of a binder (a soluble polymeric substance), 1 part by weight of a dispersant (a nonionic surfactant), and 1 part by weight of an defoamer (an organic polymeric substance), and the mixture was thoroughly stirred to prepare a slurry.

Preparation of raw material powder for intermediate layer

A raw material powder for an intermediate layer was prepared by a solid phase method. Powders of metal oxides of individual elements as raw materials were weighed so that strontium, lanthanum, titanium, niobium, and iron were present at a composition ratio of a perovskite oxide represented by $Sr_{0.37}La_{0.52}Ti_{0.50}Nb_{0.10}Fe_{0.40}O_{3-\delta}$ and were mixed together in a solution. Thereafter, the solvent was removed to give a powder that was then fired at 1150°C and ground to prepare a raw material powder for an intermediate layer.

Preparation of slurry for intermediate layer

The raw material powder for an intermediate layer, the raw material powder having a composition of $Sr_{0.37}La_{0.52}Ti_{0.50}Nb_{0.10}Fe_{0.40}O_{3-\delta}$, was used as a material for an intermediate layer. 40 parts by weight of this powder was mixed with 100 parts by weight of a solvent (carbitol), 4 parts by weight of a binder (a soluble polymeric substance), 1 part by weight of a dispersant (a nonionic surfactant), and 1 part by weight of an defoamer (an organic polymeric substance). The mixture was thoroughly stirred to prepare a slurry.

Preparation of raw material powder for interconnector

A raw material powder for an interconnector was prepared by a solid phase method. Powders of metal oxides of individual elements as raw materials were weighed so that strontium, lanthanum, and titanium were present at a composition ratio of a perovskite oxide represented by $Sr_{0.90}La_{0.04}TiO_{3-\delta}$ and were mixed together in a solution. Thereafter, the solvent was removed to give a powder that was then fired at 1150°C and ground to prepare a raw material powder for an interconnector.

Preparation of slurry for interconnector

The raw material powder for an interconnector, the raw material powder having a composition of $Sr_{0.90}La_{0.04}TiO_{3-\delta}$, was used as a material for an interconnector. 40 parts by weight of this powder was mixed with 100 parts by weight of a solvent (carbitol), 4 parts by weight of a binder (a soluble polymeric substance), 1 part by weight of a dispersant (a nonionic surfactant), and 1 part by weight of an defoamer (an organic polymeric substance). The mixture was thoroughly stirred to prepare a slurry.

Preparation of solid oxide fuel cell stack

A solid oxide fuel cell stack was prepared by the following method using the green body and the slurries prepared above.

A cylindrical molded body was prepared from a green body A for a porous support by an extrusion molding method. After drying at room temperature, the molded body was heat-treated at 1100°C for 2 hours to prepare a calcined body for a support. A fuel electrode, a fuel electrode catalyst layer, an intermediate layer, a reaction inhibitory layer, and a solid electrolyte were formed in that order on a surface of the support by a slurry coating method and dried to obtain a laminated molded body including dried layers stacked. The laminated molded body was co-fired at 1300°C for 2 hours.

Next, an interconnector was formed by slurry coating method on the fired product, followed by firing at 1250°C for 2 hours.

Next, an air electrode was molded on the surface of the solid electrolyte, and then fired at 1100°C for 2 hours to prepare a solid oxide fuel cell stack. The support had a dimension after the co-firing of 10 mm in outer diameter and 1 mm in wall thickness. For the solid oxide fuel cell stack thus prepared, the thickness of the fuel electrode was 100 $\mu$m, the thickness of the fuel electrode catalyst layer was 10 $\mu$m, the thickness of the reaction inhibitory layer was 10 $\mu$m, the thickness of the solid electrolyte was 30 $\mu$m, and the thickness of the air electrode was 20 $\mu$m. The outer diameter of the support was measured with a micrometer in a place where no layer was formed. The thickness of each of the layers was determined by cutting the prepared solid oxide fuel cell stack, observing the cross section with SEM at any magnification of 30 to 2000 times, adding the maximum thickness value to the minimum thickness value thus obtained and dividing the total value by 2. The cut place was a central portion of the area where the air electrode layer was formed. For the solid oxide fuel cell stack, each of the following evaluations was carried out.

Examples 2 to 13

A solid oxide fuel cell stack was obtained in the same manner as in Example 1, except that powders having compositions shown in Table 1 were used as a material for the intermediate layer and a material for the interconnector. For the solid oxide fuel cell stack thus obtained, the following evaluations were carried out.

Comparative Example 1

A solid oxide fuel cell stack was obtained in the same manner as in Example 1, except that a powder having a composition of $Sr_{0.40}La_{0.55}Ti_{0.60}Fe_{0.40}O_{3-\delta}$ was used as the material for the intermediate layer. For the solid oxide fuel cell stack thus obtained, the following evaluations were carried out. For Comparative Example 1, a pressed product and a fuel cell were highly porous and a pressed product and a fuel cell with high denseness could not be prepared. The reason for this is considered that, due to an oxygen content of more than 3.00, a stable perovskite oxide structure could not be maintained, an impurity phase such as $La_2Ti_2O_7$ was produced, and poor denseness derived from sintering inhibition occurred.

Comparative Example 2

A solid oxide fuel cell stack was obtained in the same manner as in Example 1, except that a powder having a composition of $Sr_{0.77}La_{0.09}Ti_{0.90}Nb_{0.05}Fe_{0.05}O_{3-\delta}$ was used as the material for the intermediate layer. For the solid oxide fuel cell stack thus obtained, the following evaluations were carried out. For Comparative Example 2, a pressed product and a fuel cell were highly porous and a pressed product and a fuel cell with high denseness could not be prepared. The reason for this is cinsidered that, due to a low oxygen content, a stable perovskite oxide structure could not be maintained, an impurity phase such as $TiO_2$ was produced, and poor denseness derived from sintering inhibition occurred.

Comparative Example 3

A solid oxide fuel cell stack was obtained in the same manner as in Example 1, except that a powder having a composition of $Sr_{0.30}La_{0.55}Ti_{0.90}Nb_{0.05}Fe_{0.05}O_{3-\delta}$ was used as the material for the intermediate layer. For the solid oxide fuel cell stack thus obtained, the following evaluations were carried out.

Comparative Example 4

A solid oxide fuel cell stack was obtained in the same manner as in Example 1, except that a powder having a composition of $Sr_{0.40}La_{0.55}Ti_{0.30}Fe_{0.70}O_{3-\delta}$ was used as the material for the intermediate layer. For the solid oxide fuel cell stack thus obtained, the following evaluations were carried out.

Comparative Example 5

A solid oxide fuel cell stack was obtained in the same manner as in Example 1, except that the intermediate layer was not formed and a powder having a composition of $Sr_{0.55}La_{0.30}TiO_{3-\delta}$ was used as the material for the interconnector. For the solid oxide fuel cell stack thus obtained in Comparative Example 5, the interconnector could not be formed in the preparation of the fuel cell. The reason for this is considered that the interconnector was disadvantageously incorporated into the fuel electrode during the firing.

[Table 1]

|  | Composition of intermediate layer | Composition of interconnector |
|---|---|---|
| Example 1 | $Sr_{0.37}La_{0.52}Ti_{0.50}Nb_{0.10}Fe_{0.40}O_{3-\delta}$ | $Sr_{0.90}La_{0.04}TiO_{3-\delta}$ |
| Example 2 | $Sr_{0.30}La_{0.60}Ti_{0.30}Nb_{0.10}Fe_{0.60}O_{3-\delta}$ | $Sr_{0.90}La_{0.04}TiO_{3-\delta}$ |
| Example 3 | $Sr_{0.29}La_{0.50}Ti_{0.50}Nb_{0.20}Fe_{0.30}O_{3-\delta}$ | $Sr_{0.90}La_{0.04}TiO_{3-\delta}$ |
| Example 4 | $Sr_{0.32}La_{0.50}Ti_{0.35}Nb_{0.25}Fe_{0.40}O_{3-\delta}$ | $Sr_{0.90}La_{0.04}TiO_{3-\delta}$ |
| Example 5 | $Sr_{0.37}La_{0.50}Ti_{0.25}Nb_{0.25}Fe_{0.50}O_{3-\delta}$ | $Sr_{0.90}La_{0.04}TiO_{3-\delta}$ |
| Example 6 | $Sr_{0.37}La_{0.55}Ti_{0.40}Nb_{0.10}Fe_{0.50}O_{3-\delta}$ | $Sr_{0.90}La_{0.04}TiO_{3-\delta}$ |
| Example 7 | $Sr_{0.40}La_{0.56}Ti_{0.30}Nb_{0.10}Fe_{0.60}O_{3-\delta}$ | $Sr_{0.90}La_{0.04}TiO_{3-\delta}$ |
| Example 8 | $Sr_{0.37}La_{0.52}Ti_{0.50}Nb_{0.10}Fe_{0.40}O_{3-\delta}$ | $Sr_{0.80}La_{0.10}TiO_{3-\delta}$ |
| Example 9 | $Sr_{0.30}La_{0.60}Ti_{0.30}Nb_{0.10}Fe_{0.60}O_{3-\delta}$ | $Sr_{0.90}La_{0.10}TiO_{3-\delta}$ |
| Example 10 | $Sr_{0.29}La_{0.50}Ti_{0.50}Nb_{0.20}Fe_{0.30}O_{3-\delta}$ | $Sr_{0.80}La_{0.10}TiO_{3-\delta}$ |
| Example 11 | $Sr_{0.37}La_{0.52}Ti_{0.50}Nb_{0.10}Fe_{0.40}O_{3-\delta}$ | $Sr_{0.95}La_{0.02}TiO_{3-\delta}$ |
| Example 12 | $Sr_{0.30}La_{0.60}Ti_{0.30}Nb_{0.10}Fe_{0.60}O_{3-\delta}$ | $Sr_{0.95}La_{0.02}TiO_{3-\delta}$ |
| Example 13 | $Sr_{0.29}La_{0.50}Ti_{0.20}Nb_{0.20}Fe_{0.30}O_{3-\delta}$ | $Sr_{0.95}La_{0.02}TiO_{3-\delta}$ |

(continued)

|  | Composition of intermediate layer | Composition of interconnector |
|---|---|---|
| Comparative Example 1 | $Sr_{0.40}La_{0.55}Ti_{0.60}Fe_{0.40}O_{3-\delta}$ | $Sr_{0.90}La_{0.04}TiO_{3-\delta}$ |
| Comparative Example 2 | $Sr_{0.77}La_{0.09}Ti_{0.90}Nb_{0.05}Fe_{0.05}O_{3-\delta}$ | $Sr_{0.90}La_{0.04}TiO_{3-\delta}$ |
| Comparative Example 3 | $Sr_{0.30}La_{0.55}Ti_{0.90}Nb_{0.05}Fe_{0.05}O_{3-\delta}$ | $Sr_{0.90}La_{0.04}TiO_{3-\delta}$ |
| Comparative Example 4 | $Sr_{0.40}La_{0.55}Ti_{0.30}Fe_{0.70}O_{3-\delta}$ | $Sr_{0.90}La_{0.04}TiO_{3-\delta}$ |
| Comparative Example 5 | Free | $Sr_{0.55}La_{0.3}TiO_{3-\delta}$ |

Evaluation

Analysis of composition

For the composition of the intermediate layer and the composition of the interconnector, the composition ratio was determined by cutting out the intermediate layer and the interconnector from the prepared solid oxide fuel cell stack, and fabricating the pieces into thin films having a thickness of 100 nm to 200 nm by FIB-SEM. Elemental mapping was obtained by evaluating the thin films by STEM-EDX. The composition ratio was determined by quantitatively analyzing the elemental mapping by a thin film approximation method. As a result, it was confirmed that main components of the compositions of the intermediate layer and the interconnector were the same as those of the composition of the raw material powder.

Calculation of content of oxygen in intermediate layer

For each composition of the prepared solid oxide fuel cell stack, the content of oxygen when the sum of valences of positive ions of the elements is equal to the sum of valences of oxide ions that are divalent negative ions was determined as the content of oxygen in the intermediate layer. Calculation is carried out using valences of positive ions of the elements, specifically the valence of Sr as divalent, the valence of La and Fe as trivalent, the valence of Ti and Co as tetravalent, and Nb, V, and Ta as pentavalent. The results are shown in Table 2.

Measurement of porosity-1

For the intermediate layer and the interconnector, the porosity was measured by the following method. Specimens were obtained by subjecting raw material powders to uniaxial pressing under a load of 900 kgf/cm$^2$ and firing the pressed product at 1300°C for 2 hours under an atmospheric environment. For the specimens, the porosity was measured by an Archimedes method according to JIS R 1634. The results are shown in Table 2.

Measurement of electrical conductivity

For the intermediate layer and the interconnector, the electrical conductivity was measured by the following method. Specimens were obtained by subjecting raw material powders to uniaxial pressing under a load of 900 kgf/cm$^2$ and firing the pressed product at 1300°C for 2 hours under an atmospheric environment. For the specimens, the electrical conductivity was measured by a direct current four-terminal method based on JIS R 1650-2 under an atmospheric environment at 700°C. The results are shown in Table 2.

Identification of impurity phase

An impurity phase in the crystal phase was identified by the following method. Specimens were obtained by subjecting raw material powders for the intermediate layer to uniaxial pressing under a load of 900 kgf/cm$^2$ and firing the pressed product at 1300°C for 2 hours. The specimen was ground in a mortar to a BET of 1 m$^2$/g to 3 m$^2$/g. For the ground product, the diffraction intensity was measured by a powder X-ray diffraction analyzer (XRD: manufactured by PANalytical) at $2\theta$ = 20° to 90°. Thereafter, a peak that remained after the removal of a main peak attributable to the perovskite structure was determined as an impurity peak. This impurity peak was collated with ICDD card. As a result, it was found that the impurity phase was identified to include $TiO_2$, $La_2Ti_2O_7$, and $Fe_2TiO_4$. The results are shown in Table 2.

Measurement of thickness of intermediate layer and interconnector

The thickness of the intermediate layer and the thickness of the interconnector were measured by the following method. The prepared solid oxide fuel cell stack was cut so as to include the intermediate layer and the interconnector. The thickness of the intermediate layer and the thickness of the interconnector were determined by observing the cut plane three times with SEM at any magnification of 30 to 2000 times, adding the maximum and the minimum of the obtained values, and dividing the total by 2. The results are shown in Table 2.

Measurement of porosity-2

For the prepared solid oxide fuel cell stack, the porosity of the intermediate layer and the porosity of the interconnector were determined as follows. An SEM image was obtained by cutting out a specimen so as to include the intermediate layer from the solid oxide fuel cell stack and observing the intermediate layer with a scanning electron microscope (for example, S-4100 manufactured by Hitachi, Ltd.) under conditions of an accelerated voltage of 15 kV, a secondary electron image, and a magnification of 100 to 10000 times. The SEM image was evaluated by a software for image processing (for example, Winroofver 6.5.1 manufactured by MITANI CORPORATION). As a result, a histogram including a brightness as abscissa and an appearance frequency as ordinate was obtained. In this histogram, an area where the brightness was lower than the average of the minimum and the maximum of the brightness was regarded as a low-brightness area while an area where the brightness was higher than the average was regarded as a high-brightness area. The low-brightness area was determined as pores and the high-brightness area other than the pores was determined as the intermediate layer for binarization processing. Thereafter, the porosity of the intermediate layer was obtained by the following equation. The porosity of the interconnector was determined in the same manner as described in connection with the intermediate layer. The results are shown in Table 2.

$$\text{Porosity (\%) = Value of integral in low-brightness area} \div$$
$$\text{Value of integral of appearance frequency of whole} \times 100$$

Measurement of OCV

A power generation test was carried out using the solid oxide fuel cell stack thus obtained. A current collector on the fuel electrode side was formed by cladding a current collecting metal to an exposed area of the fuel electrode with a silver paste. A current collector on the air electrode side was formed by cladding a current collecting metal to an exposed area of an adjacent fuel electrode with a silver paste.

A power generation test was carried out under the following power generation conditions, and the electromotive force 0 hour after the operation (OCV (V)) was measured. The results are shown in Table 2.
Fuel gas: mixed gas composed of ($H_2$+3%$H_2O$) and $N_2$ (mixed ratio $H_2$ : $N_2$ = 7 : 4 (vol : vol))

Oxidation gas: air

Operating temp.: 700°C

Measurement of terminal voltage

The voltage between terminals was measured under the following power generation conditions by connecting a potential wire and a current wire to the fuel electrode in one of the adjacent power generation elements and to the fuel electrode in the adjacent other power generation element. The results are shown in Table 2.
Fuel gas: mixed gas composed of ($H_2$ + 3%$H_2O$) and $N_2$ (mixed ratio $H_2$ : $N_2$ = 7 : 4 (vol : vol))
Fuel utilization: 7%
Oxidation gas: air
Operating temp.: 700°C
Current density: 0.4 A/cm$^2$

Measurement of electrical conductivity in electrically conductive portion

Under the following evaluation conditions, a potential wire and a current wire were connected both to the fuel electrode in adjacent one power generation element and to the interconnector, and, while allowing a current to flow, a potential difference A was measured between the interconnector and the fuel electrode terminal in the adjacent one power generation element. Thereafter, a through-hole was provided so as to penetrate the interconnector and the intermediate layer and reach the fuel electrode in the adjacent one power generation element, and a potential wire and a current wire were connected through a Ag paste to the fuel electrode under the through-hole. A potential wire and a current wire were also connected to the fuel electrode in the adjacent other power generation element. While allowing a current to flow, a potential difference B was measured between the terminal of the fuel electrode in the adjacent other power generation element under the through-hole in the interconnector and the terminal of the fuel electrode in the adjacent other power generation element.

Fuel gas: mixed gas composed of ($H_2$+3%$H_2O$) and $N_2$ (mixing ratio being $H_2 : N_2 = 7 : 4$ (vol : vol))

Oxidizing gas: air

Operation temperature: 700°C

Current: 1 A

The electrical conductivity in the electrically conductive portion was determined by the following equation.

$$\text{Electrical conductivity} = \text{current} \div (\text{potential difference A} - \text{potential difference B}) \times (\text{thickness of interconnector} + \text{thickness of intermediate layer}) \div \text{electrically conductive area of interconnector}$$

The electrically conductive area of the interconnector refers to an area of the interconnector held between the air electrode and the intermediate layer and was determined with a vernier caliper. The results are shown in Table 2.

Measurement of critical fuel utilization factor

A power generation test was carried out while energizing at a current density of 0.4 A/cm$^2$ under the above conditions for the power generation test. Thereafter, the amount of the fuel gas supplied was gradually reduced, the amount of hydrogen supplied just before a rapid drop of the potential was measured, and the critical fuel utilization factor was calculated by the following equation. The results are shown in Table 2.

$$\text{Critical fuel utilization factor} = (\text{Amount of hydrogen used in power generation}) / (\text{Amount of hydrogen supplied just before rapid drop of potential}) \times 100$$

The amount of hydrogen used in the power generation was determined by the formula:

$$\text{amount of current (C/s)} \times 60 \text{ (s)} \times 22.4 \text{ (L/mol)} \div \text{Faraday constant (C/mol)} \times 1/2 \text{ (valence)} \times \text{number of power generation elements.}$$

[Table 2]

| | | Intermediate layer | | | | | Inteconnector | | | | Electrical conductivity in electrically conductive portion | O C V | Terminal voltage | Critical fuel utilization factor |
|---|---|---|---|---|---|---|---|---|---|---|---|---|---|---|
| | Oxygen content | Impurity phase | Porosity 1 | Electrical conductivity | Layer thickness | Porosity 2 | Porosity 1 | Electrical conductivity | Layer thickness | Porosity 2 | | | | |
| | | | (%) | (S/cm) | (μm) | (%) | (%) | (S/cm) | (μm) | (%) | (S/cm) | (V) | (V) | (%) |
| Example 1 | 3.00 | None | 0.1 | 0.15 | 38 | 0.1 | 1.5 | 0.03 | 9 | 1.4 | 0.05 | 1.14 | 0.62 | 69 |
| Example 2 | 2.95 | None | 0.3 | 0.05 | 41 | 0.2 | 1.5 | 0.03 | 12 | 1.2 | 0.06 | 1.12 | 0.63 | 69 |
| Example 3 | 2.99 | None | 0.4 | 0.12 | 36 | 0.4 | 1.5 | 0.03 | 13 | 1.4 | 0.05 | 1.13 | 0.63 | 69 |
| Example 4 | 2.99 | None | 0.3 | 0.14 | 37 | 0.3 | 1.5 | 0.03 | 8 | 1.0 | 0.04 | 1.11 | 0.62 | 69 |
| Example 5 | 2.99 | None | 0.3 | 0.10 | 40 | 0.4 | 1.5 | 0.03 | 11 | 1.3 | 0.06 | 1.12 | 0.64 | 69 |
| Example 6 | 3.00 | None | 1.0 | 0.06 | 45 | 1.0 | 1.5 | 0.03 | 15 | 1.5 | 0.06 | 1.11 | 0.62 | 69 |
| Example 7 | 2.99 | None | 0.3 | 0.16 | 36 | 0.3 | 1.5 | 0.03 | 12 | 1.4 | 0.1 | 1.10 | 0.63 | 69 |
| Example 8 | 3.00 | None | 0 | 0.15 | 26 | 0 | 1.2 | 0.04 | 10 | 1.1 | 0.13 | 1.13 | 0.64 | 69 |
| Example 9 | 2.95 | None | 0.3 | 0.05 | 20 | 0.3 | 1.2 | 0.04 | 5 | 0.8 | 0.03 | 1.12 | 0.63 | 69 |
| Example 10 | 2.99 | None | 0.4 | 0.12 | 24 | 0.3 | 1.2 | 0.04 | 7 | 0.9 | 0.03 | 1.14 | 0.61 | 69 |
| Example 11 | 3.00 | None | 0.1 | 0.15 | 56 | 0.2 | 2.2 | 0.02 | 11 | 1.7 | 0.05 | 1.13 | 0.62 | 69 |
| Example 12 | 2.95 | None | 0.3 | 0.05 | 61 | 0.3 | 2.2 | 0.02 | 10 | 2.4 | 0.03 | 1.13 | 0.62 | 69 |
| Example 13 | 2.99 | None | 0.4 | 0.12 | 65 | 0.4 | 2.2 | 0.02 | 13 | 2.2 | 0.04 | 1.15 | 0.61 | 69 |
| Comparative Example 1 | 3.03 | $La_2Ti_2O_7$ | 21.13 | Immeasurable | 81 | 25.1 | 1.5 | 0.03 | 1 | Immeasurable | Immeasurable | Immeasurable | Immeasurable | Immeasurable |
| Comparative Example 2 | 2.89 | $TiO_2$ | 1.5 | Immeasurable | 54 | 1.7 | 1.5 | 0.03 | 4 | 7.2 | Immeasurable | Immeasurable | Immeasurable | Immeasurable |
| Comparative Example 3 | 3.00 | None | 0.1 | 0.01 | 40 | 0.1 | 1.5 | 0.03 | 12 | 1.3 | 0.01 | 1.11 | 0.54 | 69 |

EP 3 002 812 B1

21

| | Intermediate layer | | | | | | Interconnector | | | | Electrical conductivity in electrically conductive portion | O C V | Terminal voltage | Critical fuel utilization factor |
|---|---|---|---|---|---|---|---|---|---|---|---|---|---|---|
| | Oxygen content | Impurity phase | Porosity 1 | Electrical conductivity | Layer thickness | Porosity 2 | Porosity 1 | Electrical conductivity | Layer thickness | Porosity 2 | | | | |
| | | | (%) | (S/cm) | ($\mu$m) | (%) | (%) | (S/cm) | ($\mu$m) | (%) | (S/cm) | (V) | (V) | (%) |
| Comparative Example 4 | 2.88 | $Fe_2TiO_4$ | 1.5 | 9.50 | 45 | 1.6 | 1.5 | 0.03 | 3 | 9.0 | 0.001 | 0.77 | 0.15 | 42 |
| Comparative Example 5 | - | - | - | - | - | - | 1.1 | 0.04 | Impossible to form | Immeasurable | Immeasurable | Immeasurable | Immeasurable | Immeasurable |

EP 3 002 812 B1

22

**Claims**

1. A solid oxide fuel cell stack comprising:

a plurality of power generation elements, each of which comprising a fuel electrode, a solid electrolyte, and an air electrode stacked in that order; and
an interconnector that electrically connects the air electrode in one of adjacent power generation elements in the plurality of the power generation elements to the fuel electrode in the other power generation element, the plurality of power generation elements being connected in series to each other, wherein
an intermediate layer having a porosity of not more than 1% and an electrical conductivity of not less than 0.05 S/cm is provided between the interconnector and the fuel electrode in the other power generation element, in a histogram obtained by an image analysis of a scanning electron microscopic (SEM) image of the intermediate layer observed with a scanning electron microscope,
the porosity is calculated by the following equation:

$$\text{Porosity (\%)} = \text{integral value in low-brightness area} \div \text{integral value of appearance frequency of the whole} \times 100$$

the low-brightness area is an area that has a lower brightness than an average of the maximum and the minimum of the brightness,
the electrical conductivity is obtained by measuring the electrical conductivity of a specimen by a direct current four-terminal method based on JIS (Japanese Industrial Standards) R 1650-2 under an atmospheric environment at 700°C, the specimen being prepared by subjecting a raw material powder for the interconnector to uniaxial pressing under a load of 900 kgf/cm$^2$ and firing the pressed product at 1300°C for 2 hours under an atmospheric environment, **characterised in that**
the intermediate layer is formed of a perovskite oxide represented by $Sr_aLa_bTi_{1-c-d}Nb_cFe_dO_{3-\delta}$ wherein a, b, c, and d are a positive real number that satisfies $0.1 \leq a \leq 0.8$, $0.1 \leq b \leq 0.8$, $0.1 \leq c \leq 0.3$, and $0.3 \leq d \leq 0.6$, and the content of oxygen $(3-\delta)$ is not more than 3.00,
the content of the perovskite oxide represented by $Sr_aLa_bTi_{1-c-d}Nb_cFe_dO_{3-\delta}$ in the intermediate layer is not less than 80% by mole, and
the interconnector is formed of a perovskite oxide represented by $Sr_xLa_yTiO_{3-\delta}$ wherein x and y are a positive real number that satisfies $0.8 \leq x + y \leq 1.0$ and $0.01 < y \leq 0.1$.

2. The solid oxide fuel cell stack according to claim 1, wherein the electrical conductivity of the intermediate layer is essentially equal to or higher than that of the interconnector and the porosity of the intermediate layer is lower than that of the interconnector.

3. The solid oxide fuel cell stack according to claim 1 or 2, wherein the thickness of the intermediate layer is larger than that of the interconnector.

4. The solid oxide fuel cell stack according to any one of claims 1 to 3, wherein the thickness of the intermediate layer is 10 $\mu$m to 100 $\mu$m.

5. The solid oxide fuel cell stack according to any one of claims 1 to 4, wherein the solid electrolyte is provided between the interconnector and the intermediate layer.

6. The solid oxide fuel cell stack according to any one of claims 1 to 5, wherein a and b in $Sr_aLa_bTi_{1-c-d}Nb_cFe_dO_{3-\delta}$ are a positive real number that satisfies $0.2 \leq a \leq 0.5$ and $0.4 \leq b \leq 0.7$.

**Patentansprüche**

1. Festoxidbrennstoffzellenstapel, umfassend:

eine Vielzahl von Stromerzeugungselementen, von denen jedes eine Brennstoffelektrode, einen festen Elektrolyten und eine Luftelektrode, die in dieser Reihenfolge gestapelt sind, umfasst; und
eine Verbindungsleitung, die die Luftelektrode in einem der benachbarten Stromerzeugungselemente in der Vielzahl von Stromerzeugungselementen elektrisch mit der Brennstoffelektrode in dem anderen Stromerzeugungselement verbindet, wobei die Vielzahl von Stromerzeugungselementen in Reihe miteinander verbunden sind, wobei

sich eine Zwischenschicht mit einer Porosität von nicht mehr als 1% und einer elektrischen Leitfähigkeit von nicht weniger als 0,05 S/cm zwischen der Verbindungsleitung und der Brennstoffelektrode in dem anderen Stromerzeugungselement befindet;

in einem Histogramm, das durch eine Bildanalyse einer rasterelektronenmikroskopischen (SEM) Aufnahme der mit einem Rasterelektronenmikroskop beobachteten Zwischenschicht erhalten wird:

die Porosität durch die folgende Gleichung berechnet wird:

$$\text{Porosität (\%)} = \text{Integralwert in Bereich geringer Helligkeit/}$$

$$\text{Integralwert der Häufigkeit des Auftretens des Ganzen x 100}$$

der Bereich geringer Helligkeit ein Bereich ist, der eine geringere Helligkeit als der Durchschnitt des Maximums und des Minimums der Helligkeit aufweist;

die elektrische Leitfähigkeit dadurch erhalten wird, dass man die elektrische Leitfähigkeit einer Probe durch ein Gleichstrom-Vierpolverfahren auf der Basis von JIS (japanische Industrienorm) R 1650-2 unter einer atmosphärischen Umgebung bei 700 °C misst, wobei die Probe dadurch hergestellt wird, dass man ein Rohstoffpulver für die Verbindungsleitung einem uniaxialen Pressen unter einer Last von 900 Kilopond/cm$^2$ unterzieht und das gepresste Produkt 2 Stunden lang bei 1300 °C unter einer atmosphärischen Umgebung brennt, **dadurch gekennzeichnet, dass**

die Zwischenschicht aus einem Oxid des Perowskittyps gebildet ist, das durch $Sr_aLa_bTi_{1-c-d}Nb_cFe_dO_{3-\delta}$ dargestellt wird, wobei a, b, c und d positive reelle Zahlen sind, die $0,1 \leq a \leq 0,8$, $0,1 \leq b \leq 0,8$, $0,1 \leq c \leq 0,3$ sowie $0,3 \leq d \leq 0,6$ erfüllen, und der Gehalt an Sauerstoff ($3-\delta$) nicht größer als 3,00 ist;

der Gehalt des durch $Sr_aLa_bTi_{1-c-d}Nb_cFe_dO_{3-\delta}$ dargestellten Oxids des Perowskittyps in der Zwischenschicht nicht kleiner als 80 Mol-% ist und

die Verbindungsleitung aus einem Oxid des Perowskittyps gebildet ist, das durch $Sr_xLa_yTiO_{3-\delta}$ dargestellt wird, wobei x und y positive reelle Zahlen sind, die $0,8 \leq x + y \leq 1,0$ und $0,01 < y \leq 0,1$ erfüllen.

2.  Festoxidbrennstoffzellenstapel gemäß Anspruch 1, wobei die elektrische Leitfähigkeit der Zwischenschicht im Wesentlichen gleich oder größer als die der Verbindungsleitung ist und die Porosität der Zwischenschicht kleiner als die der Verbindungsleitung ist.

3.  Festoxidbrennstoffzellenstapel gemäß Anspruch 1 oder 2, wobei die Dicke der Zwischenschicht größer als die der Verbindungsleitung ist.

4.  Festoxidbrennstoffzellenstapel gemäß einem der Ansprüche 1 bis 3, wobei die Dicke der Zwischenschicht 10 $\mu$m bis 100 $\mu$m beträgt.

5.  Festoxidbrennstoffzellenstapel gemäß einem der Ansprüche 1 bis 4, wobei sich der feste Elektrolyt zwischen der Verbindungsleitung und der Zwischenschicht befindet.

6.  Festoxidbrennstoffzellenstapel gemäß einem der Ansprüche 1 bis 5, wobei a und b in $Sr_aLa_bTi_{1-c-d}Nb_cFe_dO_{3-\delta}$ positive reelle Zahlen sind, die $0,2 \leq a \leq 0,5$ und $0,4 \leq b \leq 0,7$ erfüllen.

**Revendications**

1.  Un empilement de piles à combustible à oxyde solide comprenant :

une pluralité d'éléments générateurs de courant, chacun comprenant une électrode à combustible, un électrolyte solide, et une électrode à air empilés dans cet ordre ; et
un interconnecteur qui connecte électriquement l'électrode à air dans l'un des éléments générateurs de courant adjacents dans la pluralité d'éléments générateurs de courant à l'électrode à combustible dans l'autre élément générateur de courant, la pluralité des éléments générateurs de courant étant connectés en série les uns aux autres, où

une couche intermédiaire ayant une porosité inférieure ou égale à 1 % et une conductivité électrique supérieure ou égale à 0,05 S/cm est prévue entre l'interconnecteur et l'électrode à combustible dans l'autre élément générateur de courant,

dans un histogramme obtenu en analysant l'image d'une microscopie électronique à balayage (MEB) de la couche intermédiaire observée à l'aide d'un microscope électronique à balayage,

la porosité est calculée à l'aide de l'équation suivante :

$$\text{Porosité (\%)} = \text{valeur intégrale en zone de faible luminosité} \div \text{valeur intégrale de fréquence d'apparition de la zone entière} \times 100$$

la zone de faible luminosité est une zone dont la luminosité est plus faible qu'une moyenne du minimum et du maximum de la luminosité,

la conductivité électrique est obtenue en mesurant la conductivité électrique d'un échantillon à l'aide d'un procédé à 4 contacts en courant continu basé sur JIS (normes industrielles japonaises) R 1650-2 sous environnement atmosphérique à 700 °C, l'échantillon étant préparé en soumettant une poudre de matière première pour l'interconnecteur à un pressage uniaxial sous une charge de 900 kgf/cm$^2$ et en cuisant le produit pressé à 1300 °C pendant 2 heures sous environnement atmosphérique, **caractérisé en ce que**

la couche intermédiaire est constituée d'un oxyde de type pérovskite représenté par $Sr_aLa_bTi_{1-c-d}Nb_cFe_dO_{3-\delta}$ où a, b, c, et d sont un nombre réel positif qui satisfait $0,1 \le a \le 0,8$, $0,1 \le b \le 0,8$, $0,1 \le c \le 0,3$, et $0,3 \le d \le 0,6$, et la teneur en oxygène $(3-\delta)$ est inférieure ou égale à 3,00,

la teneur en oxyde de type pérovskite représenté par $Sr_aLa_bTi_{1-c-d}Nb_cFe_dO_{3-\delta}$ dans la couche intermédiaire est supérieure ou égale à 80 % par mole, et

l'interconnecteur est constitué d'un oxyde de type pérovskite représenté par $Sr_xLa_yTiO_{3-\delta}$ où x et y sont un nombre réel positif qui satisfait $0,8 \le x + y \le 1,0$ et $0,01 < y \le 0,1$.

2. L'empilement de piles à combustible à oxyde solide selon la revendication 1, où la conductivité électrique de la couche intermédiaire est essentiellement supérieure ou égale à celle de l'interconnecteur et la porosité de la couche intermédiaire est inférieure à celle de l'interconnecteur.

3. L'empilement de piles à combustible à oxyde solide selon la revendication 1 ou 2, où la couche intermédiaire présente une épaisseur supérieure à celle de l'interconnecteur.

4. L'empilement de piles à combustible à oxyde solide selon l'une quelconque des revendications 1 à 3, où la couche intermédiaire présente une épaisseur de 10 $\mu$m à 100 $\mu$m.

5. L'empilement de piles à combustible à oxyde solide selon l'une quelconque des revendications 1 à 4, où l'électrolyte solide est prévu entre l'interconnecteur et la couche intermédiaire.

6. L'empilement de piles à combustible à oxyde solide selon l'une quelconque des revendications 1 à 5, où a et b dans $Sr_aLa_bTi_{1-c-d}Nb_cFe_dO_{3-\delta}$ sont un nombre réel positif qui satisfait $0,2 \le a \le 0,5$ et $0,4 \le b \le 0,7$.

210

201

A1

40

30

20

A2

10

(a)

X

Z

Y

FIG. 1A

(b)

210

10

40 | 30 | 20

405a

404a

405b

304a

304a

305b

305a

204a

204a

205b

205a

104a

105b

404b

304b

304b

305b

204b

204b

205b

105a 104b

402b

301

302b

302b

301a

202b

202b

301

102b

402a

303

302a

302a

303

202a

202a

303

102a

Z

X ← ⊗ → Y

FIG. 1B

FIG. 2

FIG. 3

FIG. 4

FIG. 5

EP 3 002 812 B1

FIG. 6

EP 3 002 812 B1

FIG. 7

FIG. 8

FIG. 9

FIG. 10

EP 3 002 812 B1

**EP 3 002 812 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008270203 A
- JP 2013030270 A
- US 6228522 B1
- EP 1788653 A1